(19) Europäisches Patentamt
European Patent Office
Office européen des brevets

(11) **EP 4 700 711 A1**

(12) **EUROPEAN PATENT APPLICATION**
published in accordance with Art. 153(4) EPC

(43) Date of publication:
**25.02.2026 Bulletin 2026/09**

(21) Application number: **24792489.7**

(22) Date of filing: **02.04.2024**

(51) International Patent Classification (IPC):
**G06T 17/20** *(2006.01)* **G06T 9/00** *(2006.01)*

(52) Cooperative Patent Classification (CPC):
**G06T 9/00; G06T 17/20**

(86) International application number:
**PCT/JP2024/013546**

(87) International publication number:
**WO 2024/219213 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.04.2023 JP 2023068663**

(71) Applicant: **Sony Group Corporation
Tokyo 108-0075 (JP)**

(72) Inventors:
- **NAGANUMA Tomoya
  Tokyo 108-0075 (JP)**
- **KUMA Satoru
  Tokyo 108-0075 (JP)**
- **KATO Tsuyoshi
  Tokyo 108-0075 (JP)**
- **HAYASHI Kao
  Tokyo 108-0075 (JP)**
- **NAKAGAMI Ohji
  Tokyo 108-0075 (JP)**

(74) Representative: **D Young & Co LLP
3 Noble Street
London EC2V 7BQ (GB)**

(54) **INFORMATION PROCESSING DEVICE AND METHOD**

(57) The present disclosure relates to an information processing apparatus and an information processing method that are capable of suppressing an increase of a processing time for decoding a mesh.

A bit stream is decoded to generate a base mesh; the base mesh is subdivided until a desired definition is obtained, the subdivision being performed by recursively repeating a first generation process, a second generation process, and a third generation process until a desired level is reached, the first generation process being a process for generating edges and vertices at a processing-target level of a definition independently for each edge at a next lower level of the definition, the second generation process being a process for generating the edges and vertices at the processing-target level with respect to a central triangle at the next lower level, the third generation process being a process for generating triangles at the processing-target level independently for each triangle at the next lower level; and displacement vectors are applied to division points that are vertices of the base mesh subdivided until the desired definition is obtained. The present disclosure can be applied to, for example, an information processing apparatus, an electronic apparatus, an information processing method, or a program.

FIG.13

## Description

Technical Field

The present disclosure relates to an information processing apparatus and an information processing method, and, in particular, to an information processing apparatus and an information processing method that are capable of suppressing an increase in mesh decoding processing time.

Background Art

From the past, there has been V-DMC (Video-based Dynamic Mesh Coding) as a method of encoding meshes, which are 3D data expressing a three-dimensional structure of an object by vertices and connections (see, for example, Non-Patent Literature 1). In V-DMC, a mesh to be encoded (original mesh) is expressed by a coarse (i.e., low definition) base mesh and displacement vectors of division points obtained by subdividing the base mesh, and the base mesh and the displacement vectors are encoded. The displacement vectors are stored (packed) in a two-dimensional image and encoded as an image. Since an object may change (is dynamic) in a time direction, the mesh (i.e., the base mesh and the displacement vectors) are also dynamic. Therefore, the displacement vectors are encoded as a moving image (displacement video) in which the two-dimensional images become frames.

In decoding, the base mesh and the displacement vectors are restored (generated) by decoding a bit stream by a decoding method corresponding to the encoding method. The base mesh is then subdivided, and the displacement vectors are respectively applied to the division points, to thus restore (generate) a mesh corresponding to the original mesh.

Citation List

Patent Literature

Non-patent Literature 1: "[V-CG] Apple's Dynamic Mesh Coding CfP Response" by Khaled Mammou, Jungsun Kim, Alexis Tourapis, Dimitri Podborski, and Krasimir Kolarov, ISO/IEC JTC 1/SC 29/WG 7 m59281, April 2022

Disclosure of Invention

Technical Problem

However, the base mesh subdivision method of the past involves sequential processing, which makes it difficult to parallelize the processing, and thus there has been a fear that a processing time will increase.

In view of the circumstances as described above, the present disclosure aims at enabling an increase in the mesh decoding processing time to be suppressed.

Solution to Problem

An information processing apparatus according to an aspect of the present technology is an information processing apparatus that includes a decoding unit which decodes a bit stream to generate a base mesh; a subdivision unit which subdivides the base mesh until a desired definition is obtained, the subdivision being performed by recursively repeating a first generation process, a second generation process, and a third generation process until a desired level is reached, the first generation process being a process for generating edges and vertices at a processing-target level of a definition independently for each edge at a next lower level of the definition, the second generation process being a process for generating the edges and vertices at the processing-target level with respect to a central triangle at the next lower level, the third generation process being a process for generating triangles at the processing-target level independently for each triangle at the next lower level; and a displacement vector application unit which applies displacement vectors to division points that are vertices of the base mesh subdivided until the desired definition is obtained, in which the base mesh is a mesh that has a lower definition than an encoding-target original mesh including vertices and connections that represent a three-dimensional structure of an object, the base mesh being generated by decimating the vertices from the original mesh; and the displacement vector indicates a positional difference between the division point and the vertex of the original mesh.

An information processing method according to an aspect of the present technology is an information processing method that includes decoding a bit stream to generate a base mesh; subdividing the base mesh until a desired definition is obtained, the subdivision being performed by recursively repeating a first generation process, a second generation process, and a third generation process until a desired level is reached, the first generation process being a process for generating edges and vertices at a processing-target level of a definition independently for each edge at a next lower level of the definition, the second generation process being a process for generating the edges and vertices at the processing-target level with respect to a central triangle at the next lower level, the third generation process being a process for generating triangles at the processing-target level independently for each triangle at the next lower level; and applying displacement vectors to division points that are vertices of the base mesh subdivided until the desired definition is obtained, in which the base mesh is a mesh that has a lower definition than an encoding-target original mesh including vertices and connections that represent a three-dimensional structure of an object, the base mesh being generated by decimating the vertices from the original mesh; and the displacement vector indicates a positional difference between the division point and the vertex of the original mesh.

In the information processing apparatus and information processing method according to the aspects of the present technology, a bit stream is decoded to generate a base mesh; the base mesh is subdivided until a desired definition is obtained, the subdivision being performed by recursively repeating a first generation process, a second generation process, and a third generation process until a desired level is reached, the first generation process being a process for generating edges and vertices at a processing-target level of a definition independently for each edge at a next lower level of the definition, the second generation process being a process for generating the edges and vertices at the processing-target level with respect to a central triangle at the next lower level, the third generation process being a process for generating triangles at the processing-target level independently for each triangle at the next lower level; and displacement vectors are applied to division points that are vertices of the base mesh subdivided until the desired definition is obtained.

Brief Description of Drawings

[Fig. 1] Fig. 1 is a diagram for explaining a mesh.
[Fig. 2] Fig. 2 is a diagram for explaining V-DMC.
[Fig. 3] Fig. 3 is a diagram for explaining subdivision processing.
[Fig. 4] Fig. 4 is a diagram for explaining the subdivision processing.
[Fig. 5] Fig. 5 is a diagram for explaining the subdivision processing.
[Fig. 6] Fig. 6 is a diagram for explaining the subdivision processing.
[Fig. 7] Fig. 7 is a diagram for explaining the subdivision processing.
[Fig. 8] Fig. 8 is a diagram for explaining the subdivision processing.
[Fig. 9] Fig. 9 is a diagram for explaining the subdivision processing.
[Fig. 10] Fig. 10 is a diagram for explaining the subdivision processing.
[Fig. 11] Fig. 11 is a diagram for explaining the subdivision processing.
[Fig. 12] Fig. 12 is a block diagram showing a main configuration example of a decoding device.
[Fig. 13] Fig. 13 is a diagram for explaining an update of edges and vertices.
[Fig. 14] Fig. 14 is a flowchart explaining an example of a flow of decoding processing.
[Fig. 15] Fig. 15 is a flowchart explaining an example of a flow of subdivision processing.
[Fig. 16] Fig. 16 is a diagram for explaining a first generation process.
[Fig. 17] Fig. 17 is a diagram for explaining a second generation process.
[Fig. 18] Fig. 18 is a diagram for explaining a third generation process.
[Fig. 19] Fig. 19 is a diagram for explaining parallelization of processing.
[Fig. 20] Fig. 20 is a block diagram showing a main configuration example of a computer.

Modes for Carrying Out the Invention

Hereinafter, modes for carrying out the present disclosure (hereinafter, will be referred to as embodiments) will be described. It is noted that descriptions will be given in the following order.

1. Literatures that support technical contents and technical terms, etc.
2. Subdivision processing
3. Independence of element process in subdivision processing
4. Notes

<1. Literatures that support technical contents and technical terms, etc.>

The range disclosed in the present technology includes not only contents described in the embodiments but also contents described in the following non-patent literature and the like that have already been known at the time of the application, contents of other literatures that are referenced in the following non-patent literature, and the like.

Non-Patent Literature 1: (described above)

In other words, the contents described in the non-patent literature described above, the contents of other literatures that are referenced in the non-patent literature described above, and the like also become grounds in determining supporting conditions.

<2. Subdivision processing>

<V-DMC>

From the past, there has been, as 3D data expressing a three-dimensional structure of a steric structure (an object having a three-dimensional shape) a mesh (Mesh) that expresses a three-dimensional shape of an object surface by forming polygons using vertices and connections (also referred to as edges).

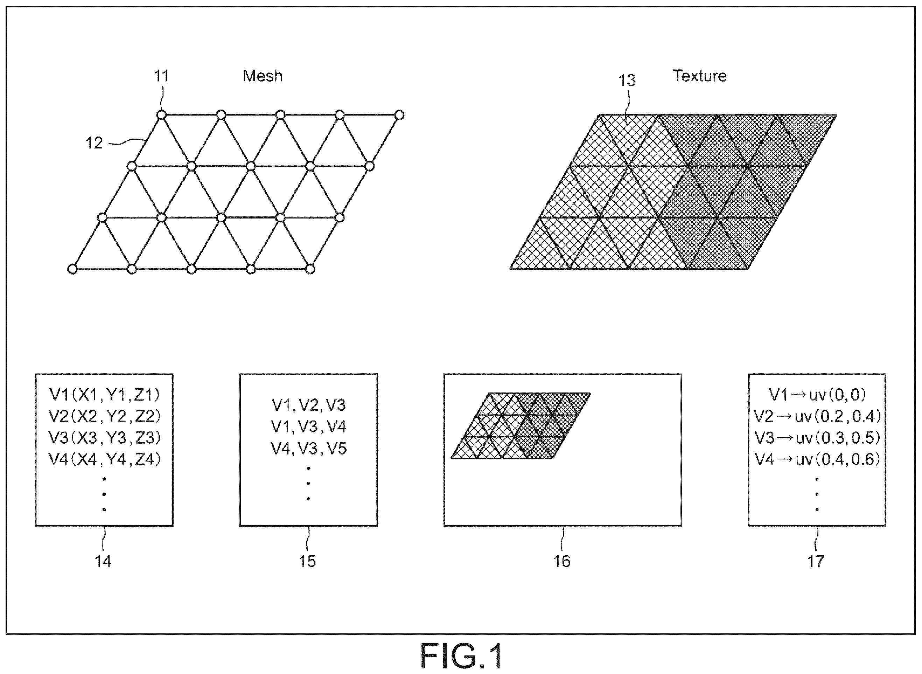

As shown on the left side of the upper row in Fig. 1, in a mesh, vertices 11 and connections 12 connecting the vertices 11 form polygonal planes (polygons). These polygons (also referred to as faces) express a surface of an object having a three-dimensional structure, that is, the three-dimensional shape of the object. It is noted that a texture 13 can be applied to each of the faces of this mesh.

Data of the mesh includes information such as that shown on the lower row of Fig. 1. Vertex information 14 shown first from the left on the lower row of Fig. 1 is information indicating a three-dimensional position (three-dimensional coordinates (X, Y, Z)) of each of the vertices 11 forming the mesh. Connection information 15 shown second from the left on the lower row of Fig. 1 is information indicating each of the connections (edges) 12 forming the mesh. Texture image 16 shown third from the left on the lower row of Fig. 1 is map information regarding the texture 13 attached to each face. UV map 17 shown fourth from the left on the lower row of Fig. 1 is information indicating a correspondence relationship between the vertices 11 and the texture 13. The UV map 17 shows coordinates (UV coordinates) of each of the vertices 11 in the texture image 16.

An example of such a mesh encoding method is V-DMC (Video-based Dynamic Mesh Coding) as disclosed in Non-patent Literature 1.

In V-DMC, a mesh to be encoded (will be referred to as an original mesh in the present specification) is expressed by a base mesh having a lower definition (i.e., coarser) than the original mesh and displacement vectors of division points obtained by subdividing the base mesh, and the base mesh and the displacement vectors are encoded.

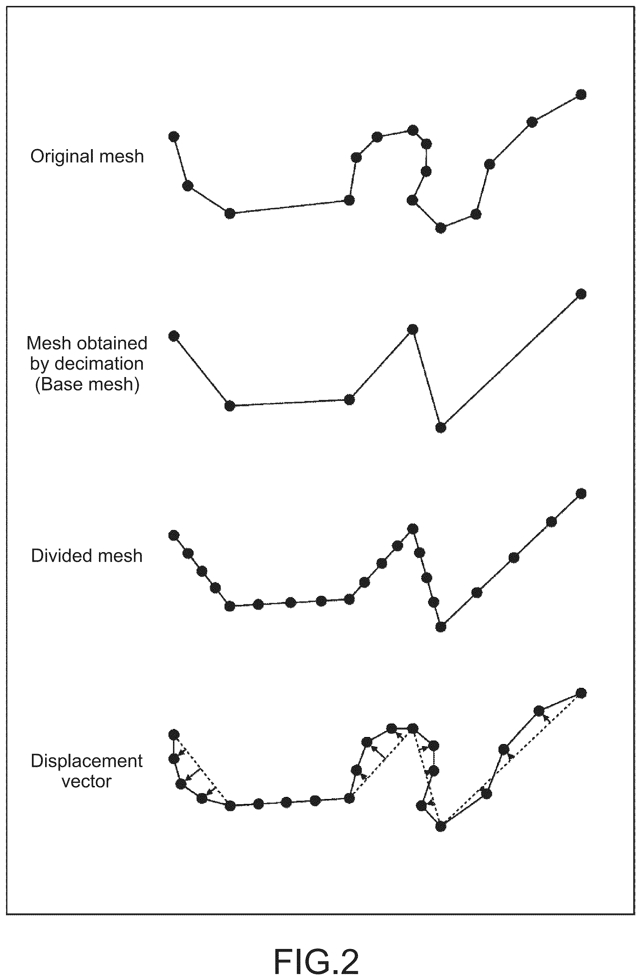

For example, it is assumed that there is an original mesh as shown on the top row of Fig. 2. In Fig. 2, black dots indicate vertices, and lines connecting the black dots indicate connections (edges). As described above, a mesh originally forms polygons using vertices and edges, but for the sake of convenience of explanations, the mesh is described herein as a group of vertices that are connected linearly (in series).

By decimating (Decimate) some of the vertices of the original mesh, a coarse (low-definition) mesh is formed as shown on the second row from the top in Fig. 2. This is called the base mesh.

By subdividing (Subdivide) each polygon of this base mesh, vertices and edges are added as shown on the third row from the top in Fig. 2. Herein, it is assumed that the vertices equal to the number of vertices decimated from the original mesh are added by this subdivision. Accordingly, a mesh having the same number of vertices as the original mesh is obtained. In the present specification, these added vertices are also referred to as division points.

However, since the connections are updated when the vertices of the original mesh are decimated, and the division points are formed on the updated connections (edges), a shape of this subdivided base mesh differs from that of the original mesh. More specifically, as shown on the bottom row of Fig. 2, the positions of the division points (on the dotted line) differ from those of the original mesh. In the present specification, differences between the positions of the division points and the positions of the vertices of the original mesh will be referred to as displacement vectors.

By expressing the original mesh as the base mesh and the displacement vectors in this manner, the number of polygons (i.e., the number of vertices and edges) is reduced. Therefore, by encoding the base mesh and the displacement vectors instead of encoding the original mesh, it is possible to suppress lowering of encoding efficiency (an increase of an encoding amount).

In decoding, a bit stream is decoded by a decoding method corresponding to the encoding method, to restore (generate) the base mesh and the displacement vectors. The base mesh is then subdivided, and the displacement vectors are respectively applied to the division points to restore (generate) the original mesh. It is noted that in actuality, the restored mesh may contain an encoding distortion and/or the like, so there is a possibility that the restored original mesh will not completely match with the original mesh obtained before encoding. However, in descriptions below, for the sake of convenience of explanations, it is assumed that the original mesh is restored by decoding without taking into consideration the encoding distortion and/or the like. In addition, it is assumed that the polygons each have a triangular shape in descriptions below.

<Subdivision of base mesh>

Next, descriptions will be given on the subdivision of the base mesh in this decoding. As described above, the base mesh has a lower definition (fewer polygons) than the original mesh, so the polygons are divided until the definition becomes equivalent to that of the original mesh (i.e., vertices and edges are added so as to divide the polygons). Such a method for the subdivision is arbitrary, but generally, a mesh with a desired definition is restored (generated) by recursively repeating processing of adding vertices and edges to the base mesh so as to divide each of the polygons (triangles) into a predetermined number (i.e., hierarchically subdividing the base mesh).

For example, in the case of a method called midpoint subdivision (Midpoint subdivision), a polygon (triangle) is divided into four by adding division points (vertices) to divide each of the edges into two. By repeating this processing recursively, a mesh with a desired definition is restored (generated). Descriptions below will be given while using this midpoint subdivision as an example.

In such subdivision processing, three pieces of information, that is, the vertex information, the edge information (connection information), and the triangle information (polygon information), are managed. The vertex information (vertex(float3[])) includes identification information (also referred to as a vertex ID) and coordinates of each vertex, and the like. The edge information (edges(int2[])) includes identification information (also referred to as an edge ID) regarding each edge, identification information regarding vertices positioned at both ends of the edge, and the like. The triangle information (triangles(int3[])) includes identification information (also referred to as a triangle ID) regarding each polygon, identification information (vertex ID) regarding each vertex of the polygon, and the like.

As described above, in the subdivision of the base mesh, the definition is updated hierarchically by the recursive processing. That is, the vertex information, the edge information, and the triangle information are also updated hierarchically. It is noted that in the present specification, a level of the definition (also referred to as LoD (Level Of Detail)) is described assuming that the base mesh (LoD0) is the lowest level, and each time a polygon is divided, the level becomes a next higher level. That is, the higher the definition becomes (i.e., the smaller the polygon), the higher the level becomes (higher level).

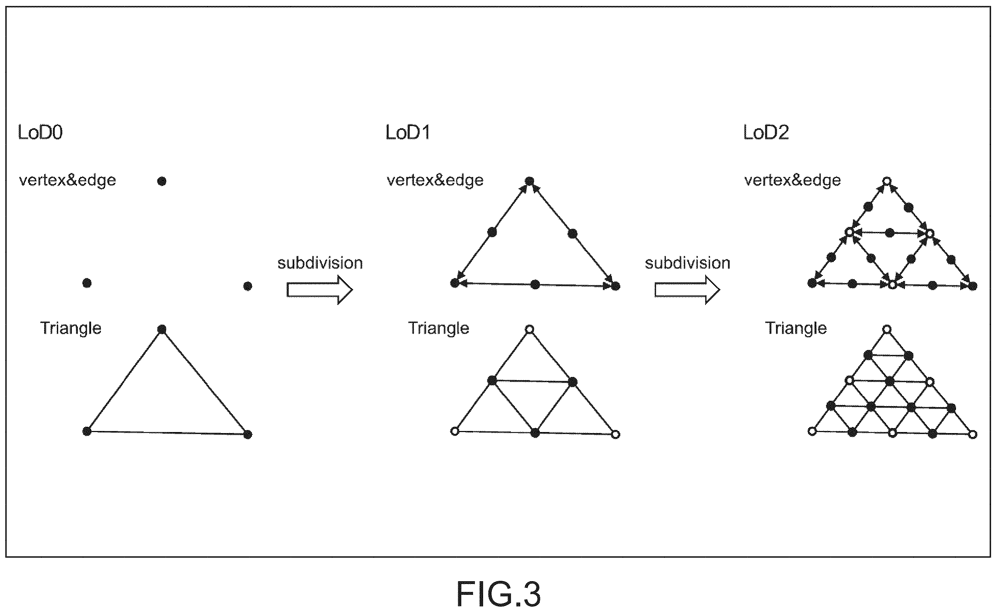

For example, it is assumed that the level of definition of the base mesh is LoD0. In this LoD0, as shown on the left side of Fig. 3, the vertices of the base mesh are set as vertices at LoD0, and information related to those vertices is stored in the vertex information. Furthermore, a polygon (triangle) formed by connecting those vertices is set as a triangle at LoD0, and information related to that triangle is stored in the triangle information. It is noted that since an edge is not formed at LoD0, no information related to an edge at LoD0 is stored in the edge information.

A mesh at a next higher level (LoD1) is formed by dividing the polygon of this base mesh once (dividing into four). For example, as shown at the center of Fig. 3, edges connecting the vertices at LoD0 are set as edges at LoD1, and information related to these edges is stored in the edge information. Further, midpoints of these edges at LoD1 are set as vertices at LoD1, and information related to these vertices is stored (added) in the vertex information. Furthermore, the polygon (triangle) formed by connecting the vertices at LoD0 and LoD1 are set as a triangle at LoD1, and information related to that triangle is stored in the triangle information (triangle information is updated).

Similarly, a mesh at a next higher level (LoD2) is formed by dividing the polygon of the mesh at LoD1 once (dividing into four). For example, as shown on the right side of Fig. 3, the edges connecting the vertices at LoD1 are set as edges at LoD2, and information related to the edges is stored (added) in the edge information. Further, midpoints of those edges at LoD2 are set as vertices at LoD2, and information related to those vertices is stored (added) in the vertex information. Furthermore, a polygon (triangle) formed by connecting the vertices at LoD0 to LoD2 is set as a triangle at LoD2, and information related to that triangle is stored in the triangle information (triangle information is updated).

<Update of edge information>

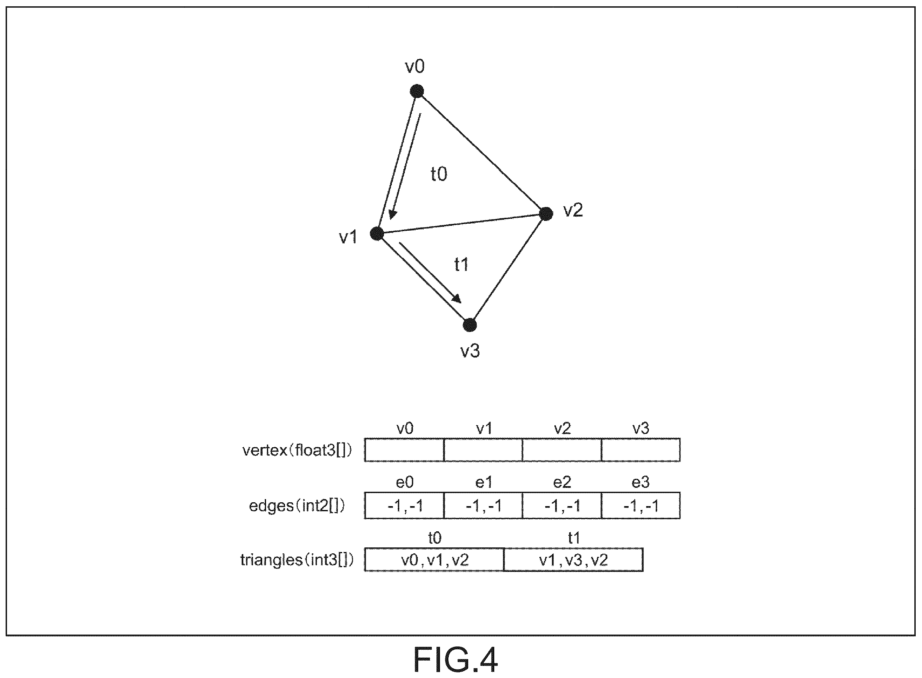

More detailed descriptions will be given. For example, it is assumed that as shown in Fig. 4, vertices v0 to v4 and triangles t0 and t1 are formed at the base mesh (LoD0). The vertex information (vertex) stores information on each vertex (v0 to v3). In actuality, the coordinates of each of the vertices are also stored, but an illustration thereof is omitted in Fig. 4. The edge information (edges) stores information on edges e0 to e3. However, since the edges e0 to e3 do not actually exist, dummy information (-1, -1) is stored. Further, the triangle information (triangles) stores information on the triangles t0 and t1 (e.g., vertex IDs of the vertices of the triangles ((v0, v1, v2), (v1, v3, v2)), etc.).

When updating the edge information in the subdivision, vertexToTriangle and vertexToEdge are generated, and the edge information is generated from them. vertexToTriangles is information that links a vertex ID with a triangle ID of a triangle to which a vertex indicated by that vertex ID belongs (a triangle having the vertex indicated by the vertex ID as the vertex). vertexToEdge is information that links a vertex ID with a vertex ID of another vertex connected to that vertex by an edge. Both vertexToTriangle and vertexToEdge need to be generated by exhaustively searching the relationships between the vertices and the triangles.

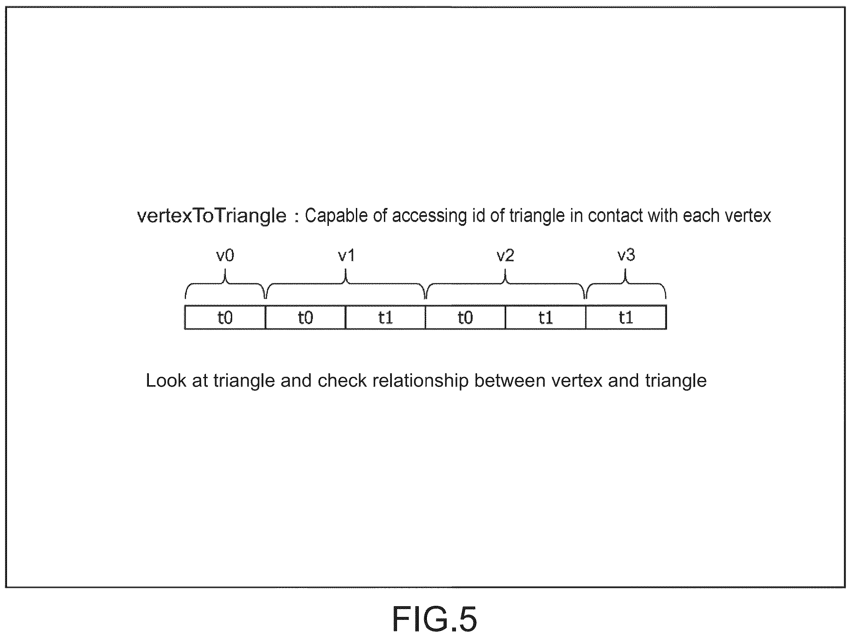

First, as shown in Fig. 5, each triangle is searched to check a relationship between a vertex and a triangle, and vertexToTriangles is generated. By this information, a vertex is linked to a triangle that comes into contact with that vertex (having the vertex as a vertex). In other words, by vertexToTriangles, it is possible to derive, from the vertex ID, a triangle ID of the triangle that comes into contact with that vertex. For example, in the case of Fig. 5, by using this vertexToTriangles, t0 is derived from v0. Also, t0 and t1 are derived from v1. Also, t0 and t1 are derived from v2. Also, t1 is derived from v3. In other words, vertexToTriangles indicates that the vertex v0 belongs to the triangle t0, the vertices v1 and v2 belong to the triangles t0 and t1, and the vertex v3 belongs to the triangle t1.

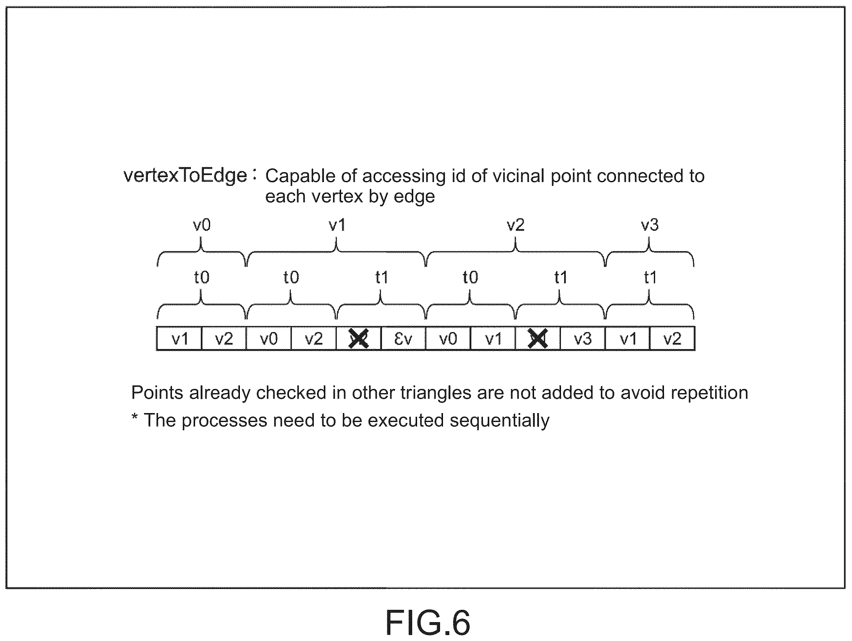

Next, vertexToEdge is generated as shown in Fig. 6. By this information, each vertex is linked to vicinal vertices connected via the edges. In other words, by vertexToEdge, it is possible to derive, from the vertex ID, vertex IDs of other vertices connected to that vertex via the edges. In generating this vertexToEdge, the search for other vertices connected to a processing-target vertex via edges is performed for each triangle using vertexToTriangles described above.

That is, as in the example shown in Fig. 6, the vertices v1 and v2 are detected as other vertices that are connected to the vertex v0 by the edges and belong to the triangle t0. Also, the vertices v0 and v2 are detected as other vertices that are connected to the vertex v1 by the edges and belong to the triangle t0. Also, the vertices v2 and v3 are detected as other vertices that are connected to the vertex v1 by the edges and belong to the triangle t1. Also, the vertices v0 and v1 are detected as other vertices that are connected to the vertex v2 by the edges and belong to the triangle t0. Also, the vertices v1 and v3 are detected as other vertices that are connected to the vertex v2 by the edges and belong to the triangle t1. Also, the vertices v1 and v2 are detected as other vertices that are connected to the vertex v3 by the edges and belong to the triangle t1.

The vertices detected in this manner are added to vertexToEdge. However, the vertices already detected in other triangles are not added to vertexToEdge to avoid overlap. For example, the vertex v2 that has been detected as the another vertex connected to the vertex v1 by the edge and belongs to the triangle t1 is not added to vertexToEdge since it is also detected as the vertex belonging to the triangle t0. Similarly, the vertex v1 that has been detected as the another vertex connected to the vertex v2 by the edge and belongs to the triangle t1 is not added to vertexToEdge since it is also detected as the vertex belonging to the triangle t0. This processing needs to be performed sequentially.

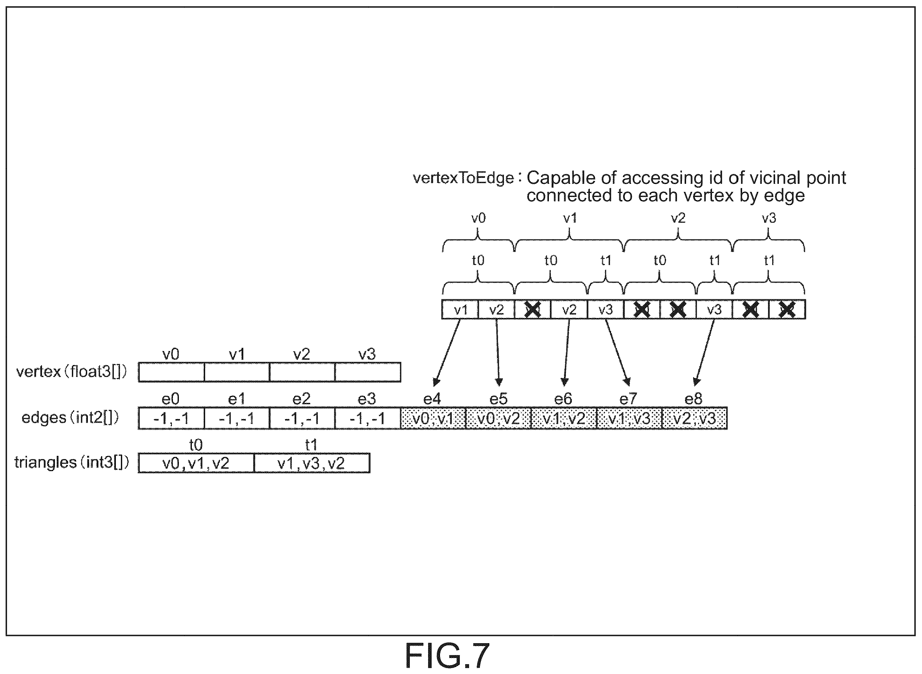

Next, the vertex information is updated using this vertexToEdge. That is, as in the example shown in Fig. 7, the connection between the vertices indicated by vertexToEdge is regarded as an edge, and information thereof is added to the edge information. However, information on an edge that overlaps with the edge already stored in the edge information is not stored. That is, the overlapping edges are detected. For example, in the case of Fig. 7, by using vertexToEdge, it is possible to obtain the vertex v1 from the vertex v0, and also obtain the vertex v0 from the vertex v1. That is, vertexToEdge includes information on the edge from the vertex v0 to the vertex v1 and the edge from the vertex v1 to the vertex v0. Since these edges are the same (overlapping), the edges are stored as one edge e4 (v0, v1) in the edge information. Similarly, vertexToEdge includes information on the edge from the vertex v0 to the vertex v2 and the edge from the vertex v2 to the vertex v0. Since these edges are the same (overlapping), the edges are stored as one edge e5 (v0, v2) in the edge information. Also, vertexToEdge includes information on the edge from the vertex v1 to the vertex v2 and the edge from the vertex v2 to the vertex v1. Since these edges are the same (overlapping), the edges are stored as one edge e6 (v1, v2) in the edge information. Also, vertexToEdge includes information on the edge from the vertex v1 to the vertex v3 and the edge from the vertex v3 to the vertex v1. Since these edges are the same (overlapping), the edges are stored as one edge e7 (v1, v3) in the edge information. Also, vertexToEdge includes information on the edge from the vertex v2 to the vertex v3 and the edge from the vertex v3 to the vertex v2. Since these edges are the same (overlapping), the edges are stored as one edge e8 (v2, v3) in the edge information.

The edges e4 to e8 are added to the edge information as processing-target edges while avoiding the overlap as described above. That is, vertexToTriangle and vertexToEdge are generated, and the edge information can be generated from them.

<Update of vertex information>

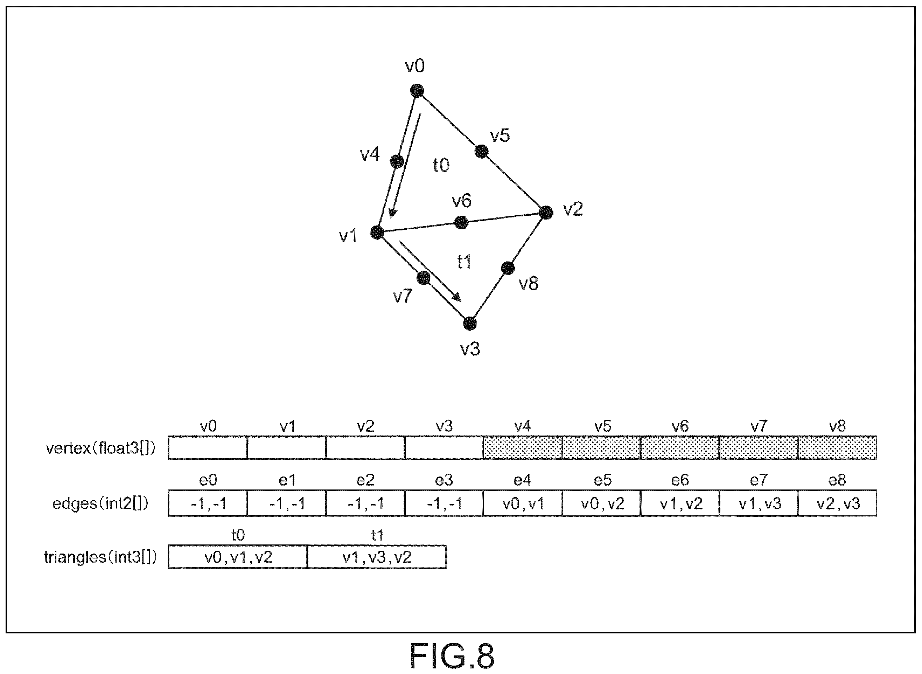

When updating the vertex information in the subdivision, the vertex information is updated using the edge information updated as described above. That is, as shown in Fig. 8, midpoints of the edges at processing-target LoD generated (added) as described above are added to the vertex information as vertices at processing-target LoD. That is, in Fig. 8, the midpoint of the edge e4 is added as a vertex v4. Also, the midpoint of the edge e5 is added as a vertex v5. Also, the midpoint of the edge e6 is added as a vertex v6. Also, the midpoint of the edge e7 is added as a vertex v7. Also, the midpoint of the edge e8 is added as a vertex v8. In this manner, the edge ID and the vertex ID of the vertex formed on that edge correspond to each other.

<Update of triangle information>

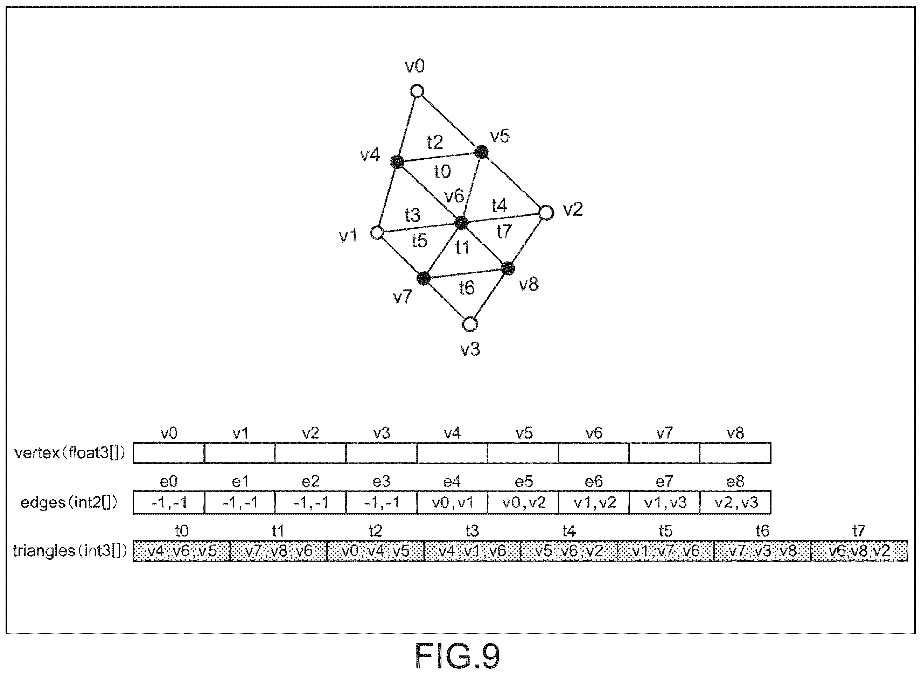

When updating the triangle information in the subdivision, the triangle information is updated using the edge information and vertex information updated as described above. That is, triangles at processing-target LoD are generated such that, with any three of the vertices that have been generated so far being vertices, a triangle at a next lower level is divided into four, and information thereof is stored in the triangle information. For example, as shown in Fig. 9, triangles t0 to t7 each having any three of the vertices v0 to v8 as vertices are formed, and information thereof is stored in the triangle information.

To generate the triangles, edgeToVertex which returns an index of a midpoint of a side ab from a vertex pair a and b is used. edgeToVertex can be expressed as follows.

$$\mathtt{edgeToVertex[a][b] = id}$$

$$\mathtt{edges[id] = (a, b)}$$

$$\mathtt{vertex[id] = midpoint\ of\ a\ and\ b}$$

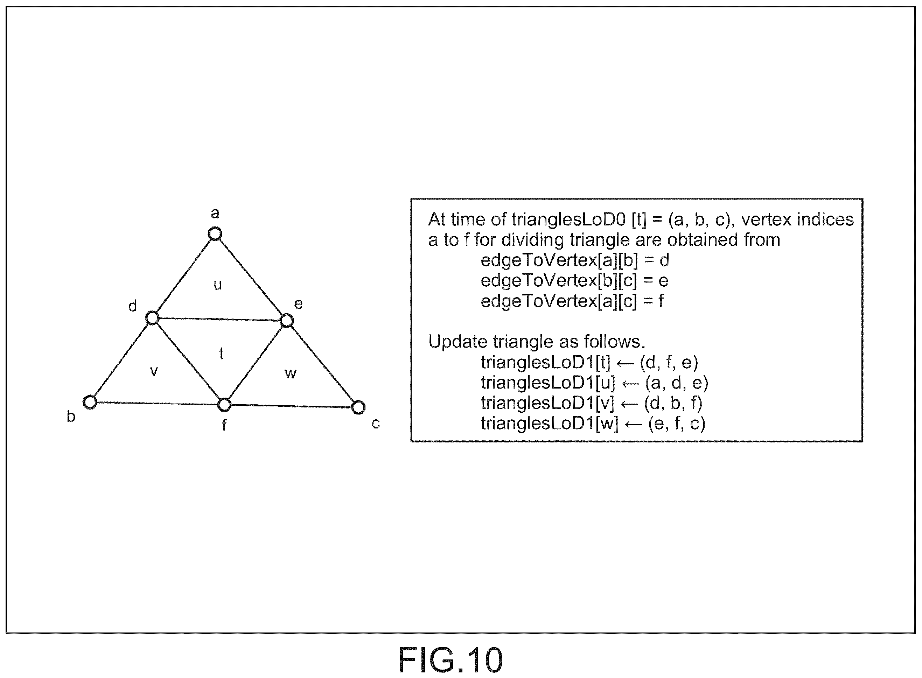

For example, as shown in Fig. 10, in the case of triangles$_{LoD0}$[t] = (a, b, c), indices (a to f) of vertices that divide the triangle can be obtained from the following three equations.

$$\mathtt{edgeToVertex[a][b] = d}$$

$$\mathtt{edgeToVertex[b][c] = e}$$

$$\mathtt{edgeToVertex[a][c] = f}$$

Therefore, the triangle information can be updated as in the following four equations. In other words, the triangle information can be updated so as to divide the triangle into four.

triangles$_{LoD1}$[t] ← (d, f, e)
triangles$_{LoD1}$[u] ← (a, d, e)
triangles$_{LoD1}$[v] ← (d, b, f)
triangles$_{LoD1}$[w] ← (e, f, c)

The generation of this edgeToVertex includes sequential processing.

As described above, in the case of the midpoint subdivision, the triangle at the next lower level is divided into four when updating the triangle information (id$_{now}$: 0 to Triangle$_{count}$ - 1). A triangle obtained after the division, which is positioned at a center of the triangle obtained before the division, is allocated with the same ID as the triangle obtained before the division. In other words, information regarding the triangle obtained after the division, which is positioned at the center of the triangle obtained before the division, is written in the triangle information at the same position as the triangle obtained before the division (id$_{center}$ = id$_{now}$). Information of other three triangles is stored after the information regarding that central triangle. In other words, (Id$_{other}$ = 3 + id$_{now}$ + Triangle$_{count}$) is obtained and written in (Id$_{other}$ + 0, id$_{other}$ + 1, id$_{other}$ + 2).

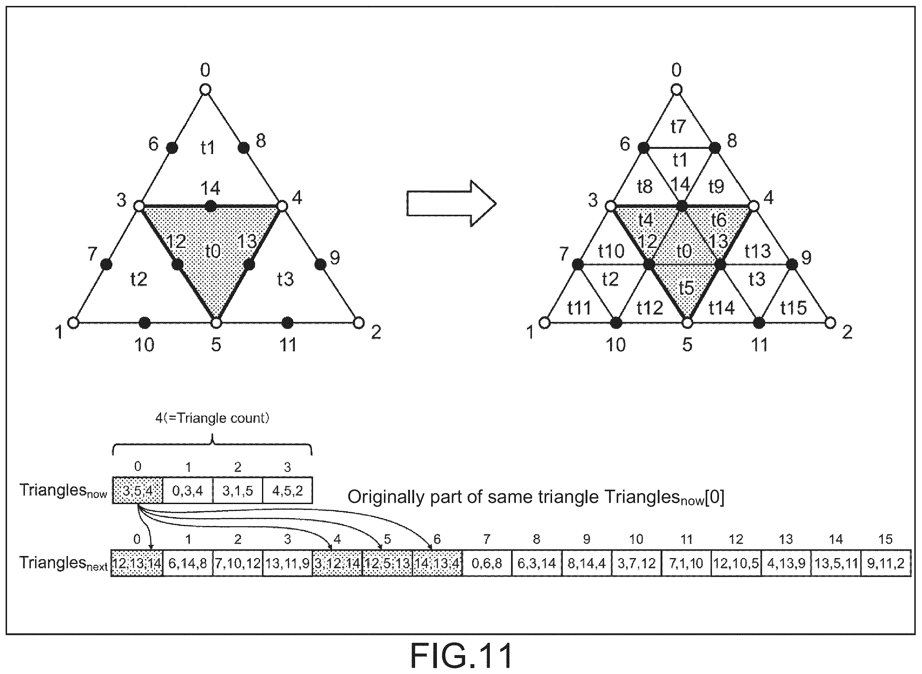

For example, in the case of Fig. 11, the triangle t0 shown on the left side of the figure is divided into four to generate triangles t0, t4, t5, and t6 shown on the right side of the figure. In this case, information regarding the triangle t0 obtained after the division is stored at the position of the triangle t0 obtained before the division, and information regarding the triangles t4 to t6 is stored after information regarding the triangles t0 to t3 obtained after the division.

<Increase in processing time due to sequential processing>

As described above, in updating the edge information and the triangle information, there has been a need to execute sequential processing such as an exhaustive search and detection of an overlap, in which processing is executed while depending on results of other processing. Therefore, it has been difficult to parallelize element processes as elements included in the subdivision processing, and thus it has been necessary to execute the processing sequentially. Therefore, there has been a fear that a processing time of the subdivision will increase.

<3. Independence of element process in subdivision processing>

In this regard, respective element processes of the subdivision processing are enabled to be executed independently. For example, an information processing apparatus may include: a decoding unit which decodes a bit stream to generate a base mesh; a subdivision unit which subdivides the base mesh until a desired definition is obtained, the subdivision being performed by recursively repeating a first generation process, a second generation process, and a third generation process until a desired level is reached, the first generation process being a process for generating edges and vertices at a processing-target level of a definition independently for each edge at a next lower level of the definition, the second generation process being a process for generating the edges and vertices at the processing-target level with respect to a central triangle at the next lower level, the third generation process being a process for generating triangles at the processing-target level independently for each triangle at the next lower level; and a displacement vector application unit which applies displacement vectors to division points that are vertices of the base mesh subdivided until the desired definition is obtained.

In addition, in the information processing apparatus, a bit stream may be decoded to generate a base mesh; the base mesh may be subdivided until a desired definition is obtained, the subdivision being performed by recursively repeating a first generation process, a second generation process, and a third generation process until a desired level is reached, the first generation process being a process for generating edges and vertices at a processing-target level of a definition independently for each edge at a next lower level of the definition, the second generation process being a process for generating the edges and vertices at the processing-target level with respect to a central triangle at the next lower level, the third generation process being a process for generating triangles at the processing-target level independently for each triangle at the next lower level; and displacement vectors may be applied to division points that are vertices of the base mesh subdivided until the desired definition is obtained.

It is noted that the base mesh is a mesh that has a lower definition than an encoding-target original mesh including vertices and connections that represent a three-dimensional structure of an object, the base mesh being generated by decimating the vertices from the original mesh. Further, the displacement vector indicates a positional difference between the division point and the vertex of the original mesh.

<Decoding device>

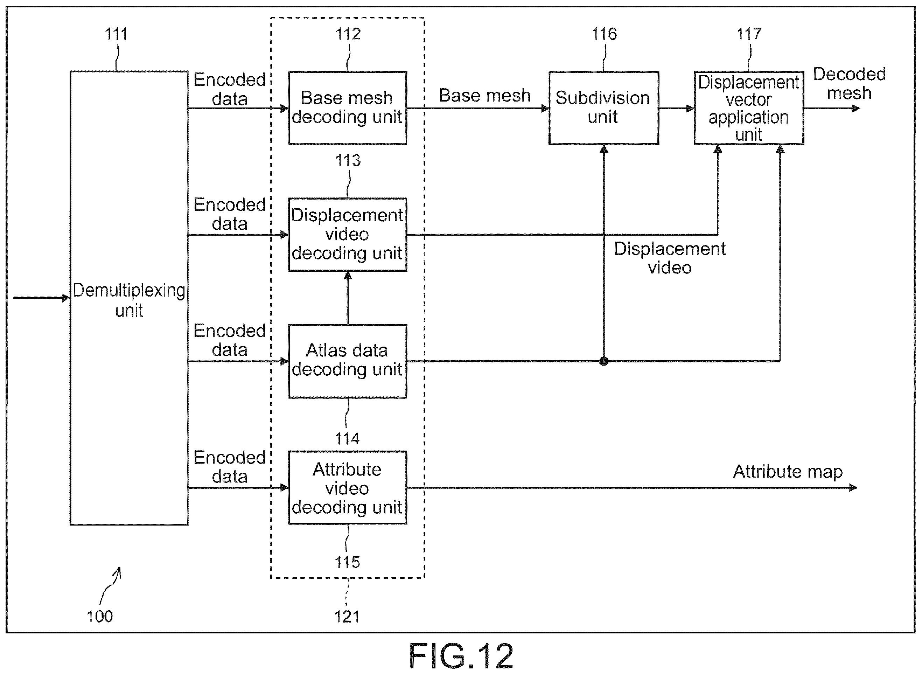

Fig. 12 is a block diagram showing an example of a configuration of a decoding device, which is one form of the information processing apparatus to which the present technology is applied. The decoding device 100 shown in Fig. 12 is a device that decodes encoded data of a mesh. The decoding device 100 decodes the encoded data of a mesh that has been encoded by a method that is basically similar to V-DMC described in Non-patent Literature 1.

Fig. 12 shows main processing units, data flows, and the like, and those shown in Fig. 12 are not necessarily everything. In other words, in the decoding device 100, there may be processing units that are not illustrated as blocks in Fig. 12, and there may be processing and data flows that are not indicated as arrows and the like in Fig. 12.

As shown in Fig. 12, the decoding device 100 includes a demultiplexing unit 111, a base mesh decoding unit 112, a displacement video decoding unit 113, an atlas data decoding unit 114, an attribute video decoding unit 115, a subdivision unit 116, and a displacement vector application unit 117. It is noted that the base mesh decoding unit 112, the displacement video decoding unit 113, the atlas data decoding unit 114, and the attribute video decoding unit 115 may be combined to become a decoding unit 121 as a single processing unit.

The decoding device 100 is supplied with a bit stream generated by an encoding device that encodes a mesh by the V-DMC method. That is, this bit stream stores encoded data of a base mesh, encoded data of a displacement video, encoded data of atlas data, encoded data of an attribute video, and the like. The demultiplexing unit 111 demultiplexes the bit stream and extracts each piece of encoded data included in the bit stream. For example, the demultiplexing unit 111 extracts encoded data of a base mesh from the bit stream and supplies the encoded data to the base mesh decoding unit 112. The demultiplexing unit 111 also extracts encoded data of a displacement video from the bit stream and supplies the encoded data to the displacement video decoding unit 113. The demultiplexing unit 111 also extracts encoded data of atlas data from the bit stream and supplies the encoded data to the atlas data decoding unit 114. The demultiplexing unit 111 also extracts encoded data of an attribute video from the bit stream and supplies the encoded data to the attribute video decoding unit 115.

The base mesh decoding unit 112 decodes the encoded data of the base mesh supplied from the demultiplexing unit 111 by a decoding method corresponding to the encoding method, to generate (restore) the base mesh. The base mesh decoding unit 112 supplies the generated base mesh to the subdivision unit 116.

The displacement video decoding unit 113 decodes the encoded data of the displacement video supplied from the demultiplexing unit 111 by a decoding method corresponding to the encoding method, to generate (restore) the displacement video. The displacement video is a moving image in which a plane onto which displacement vectors are mapped is used as a frame. For example, in the encoding device, the displacement vectors are stored in a frame at each clock time and encoded as the displacement video using a moving image encoding method. The displacement video decoding unit 113 decodes the encoded data by a moving image decoding method corresponding to the moving image encoding method, and generates a displacement video that stores the displacement vectors. It is noted that the displacement video decoding unit 113 may perform the decoding using atlas data supplied from the atlas data decoding unit 114. The displacement video decoding unit 113 supplies the generated displacement video (i.e., displacement vectors) to the displacement vector application unit 117.

The atlas data decoding unit 114 decodes the encoded data of the atlas data supplied from the demultiplexing unit 111 by a decoding method corresponding to the encoding method, to generate (restore) the atlas data. The atlas data may include various types of information related to the base mesh and the displacement vectors. For example, the atlas data may include information used for subdividing a base mesh. The atlas data may also include information used for decoding the encoded data of the displacement video. The atlas data may also include information used for extracting the displacement vectors. The atlas data decoding unit 114 supplies the generated atlas data to the displacement video decoding unit 113, the subdivision unit 116, and the displacement vector application unit 117.

The attribute video decoding unit 115 decodes the encoded data of the attribute video supplied from the demultiplexing unit 111 by a decoding method corresponding to the encoding method, to generate (restore) the attribute video. The attribute video is a moving image in which a plane onto which attributes of a mesh are mapped is used as a frame. The attribute video decoding unit 115 outputs a frame image of the generated attribute video, that is, an attribute map corresponding to the decoded mesh, to the outside of the decoding device 100. This attribute map is used for, for example, rendering in a subsequent device, and/or the like.

The subdivision unit 116 subdivides the base mesh supplied from the base mesh decoding unit 112, and supplies the subdivided base mesh to the displacement vector application unit 117. It is noted that the subdivision unit 116 may subdivide the base mesh by using the atlas data supplied from the atlas data decoding unit 114.

The displacement vector application unit 117 extracts (unpacks) the displacement vectors from each frame of the displacement video supplied from the displacement video decoding unit 113. In addition, the displacement vector application unit 117 applies the extracted displacement vectors to vertices (division points) of the subdivided base mesh supplied from the subdivision unit 116, to reconstruct the mesh. In the present specification, this reconstructed mesh will also be referred to as a decoded mesh. That is, it can be said that the displacement vector application unit 117 generates a decoded mesh. It is noted that the displacement vector application unit 117 may apply the displacement vectors by using the atlas data supplied from the atlas data decoding unit 114. The displacement vector application unit 117 outputs the generated decoded mesh to the outside of the decoding device 100. This decoded mesh is used for, for example, rendering in a subsequent device, and/or the like together with the attribute map described above.

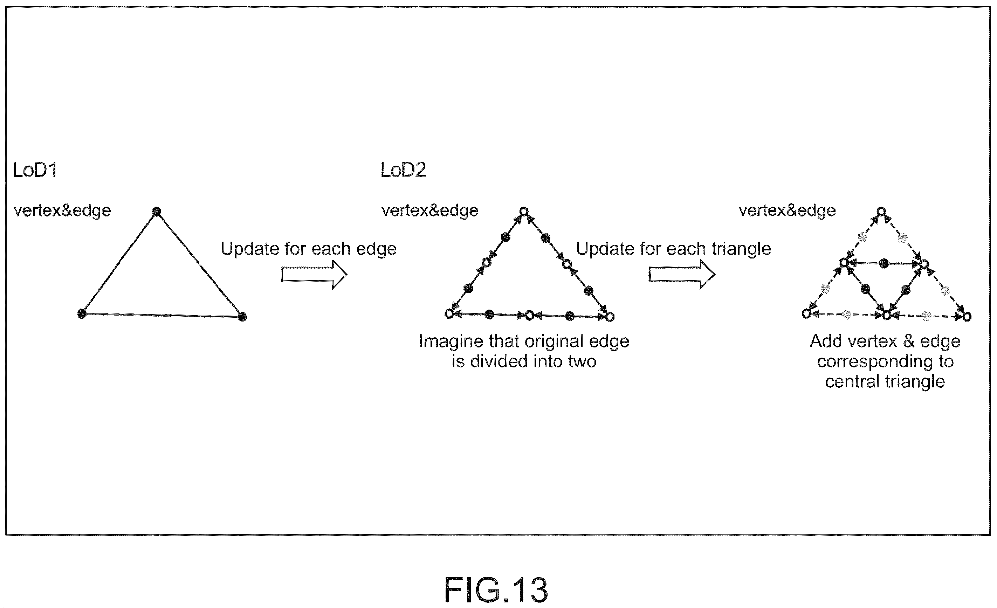

In the decoding device 100 having such a configuration, the subdivision unit 116 executes respective element processes of the subdivision processing independently as described above. For example, as shown in Fig. 13, the subdivision unit 116 performs the update of the vertices and edges by the following two generation processing.

In a first generation process, the subdivision unit 116 generates vertices and edges at processing-target LoD positioned on respective edges at LoD of a next lower level (update for each edge). That is, the subdivision unit 116 equally divides each edge at LoD of the next lower level into two, sets each of the two as an edge at processing-target LoD, and sets a midpoint of each edge at processing-target LoD as a vertex at processing-target LoD. The generations of vertices and edges are performed independently for respective edges at LoD of the next lower level. That is, the subdivision unit 116 can execute the generation of vertices and edges on a processing-target edge at LoD of the next lower level without depending on processing of the generation of vertices and edges on other edges at LoD of the next lower level or a result of the processing. Therefore, the subdivision unit 116 generates these vertices and edges independently for each edge at LoD of the next lower level.

In a second generation process, the subdivision unit 116 generates vertices and edges at processing-target LoD positioned on respective sides of a central triangle at processing-target LoD (update for each triangle). That is, the subdivision unit 116 sets each side of that central triangle as an edge at processing-target LoD, and sets a midpoint of each edge at processing-target LoD as a vertex at processing-target LoD. The generations of vertices and edges are performed independently for respective triangles. That is, the subdivision unit 116 can execute the generation of vertices and edges positioned on respective sides of a processing-target triangle without depending on processing of the generation of vertices and edges positioned on respective sides of other triangles or a result of the processing. Therefore, the subdivision unit 116 generates these vertices and edges independently for each central triangle at processing-target LoD.

Further, the subdivision unit 116 executes a third generation process for generating triangles at processing-target LoD independently for each triangle at LoD of a next lower level, using the vertices and edges generated by the first generation process and the second generation process.

With such a configuration, the subdivision unit 116 can execute respective element processes of the subdivision processing independently. For example, the subdivision unit 116 can execute an element process for each edge at LoD of a next lower level and an element process for each triangle independently. Therefore, for example, the subdivision unit 116 can execute element processes of a plurality of element processes in parallel. Therefore, the subdivision unit 116 can suppress an increase of the processing time of the subdivision processing. Consequently, the decoding device 100 can suppress an increase of a processing time for decoding a mesh.

<Flow of decoding processing>

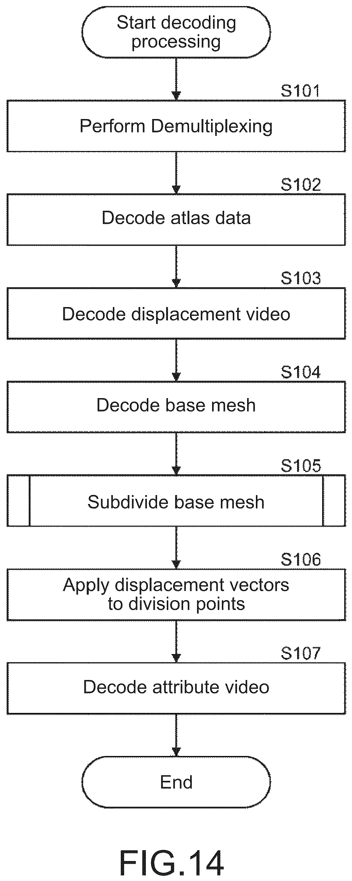

An example of a flow of decoding processing executed by the decoding device 100 will be described with reference to the flowchart shown in Fig. 14.

When the decoding processing is started, in Step S101, the demultiplexing unit 111 demultiplexes a bit stream and extracts various types of encoded data.

In Step S102, the atlas data decoding unit 114 decodes the encoded data of atlas data extracted in Step S101 to generate (restore) the atlas data.

In Step S103, the displacement video decoding unit 113 decodes the encoded data of a displacement video extracted in Step S101 to generate (restore) the displacement video. At this time, the displacement video decoding unit 113 may use the atlas data generated in Step S102.

In Step S104, the base mesh decoding unit 112 decodes the encoded data of a base mesh extracted in Step S101 to generate (restore) the base mesh.

In Step S105, the subdivision unit 116 executes the subdivision processing to subdivide the base mesh generated in Step S104. At this time, the subdivision unit 116 may use the atlas data generated in Step S102.

In Step S106, the displacement vector application unit 117 extracts (unpacks) displacement vectors from the displacement video generated in Step S103. At this time, the displacement vector application unit 117 may use the atlas data generated in Step S102. In addition, the displacement vector application unit 117 applies the extracted displacement vectors to vertices (division points) of the base mesh subdivided by the subdivision processing in Step S105, to generate (restore) a decoded mesh. The displacement vector application unit 117 outputs the generated decoded mesh to the outside of the decoding device 100.

In Step S107, the attribute video decoding unit 115 decodes the encoded data of an attribute video extracted in Step S101 to generate the attribute video. The attribute video decoding unit 115 outputs a frame image (attribute map) of the attribute video to the outside of the decoding device 100.

The decoded mesh and the attribute map output to the outside of the decoding device 100 are used for, for example, rendering in other subsequent devices, and/or the like.

<Flow of subdivision processing>

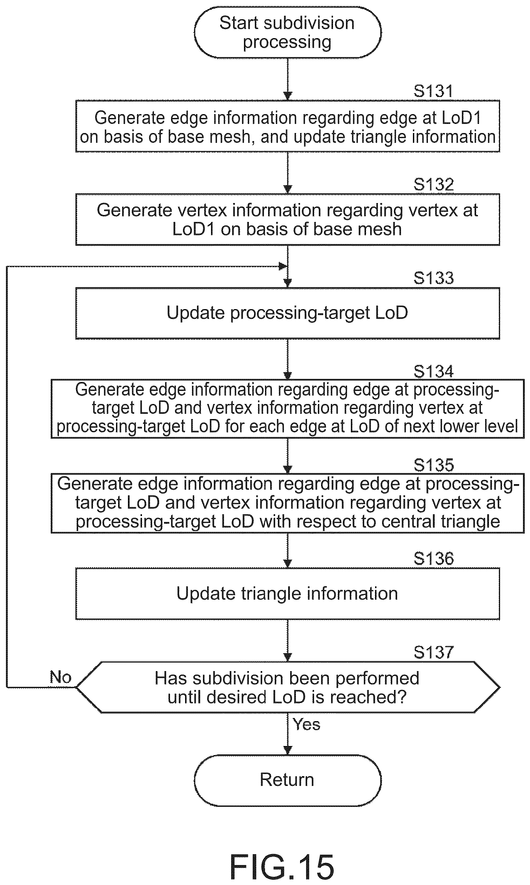

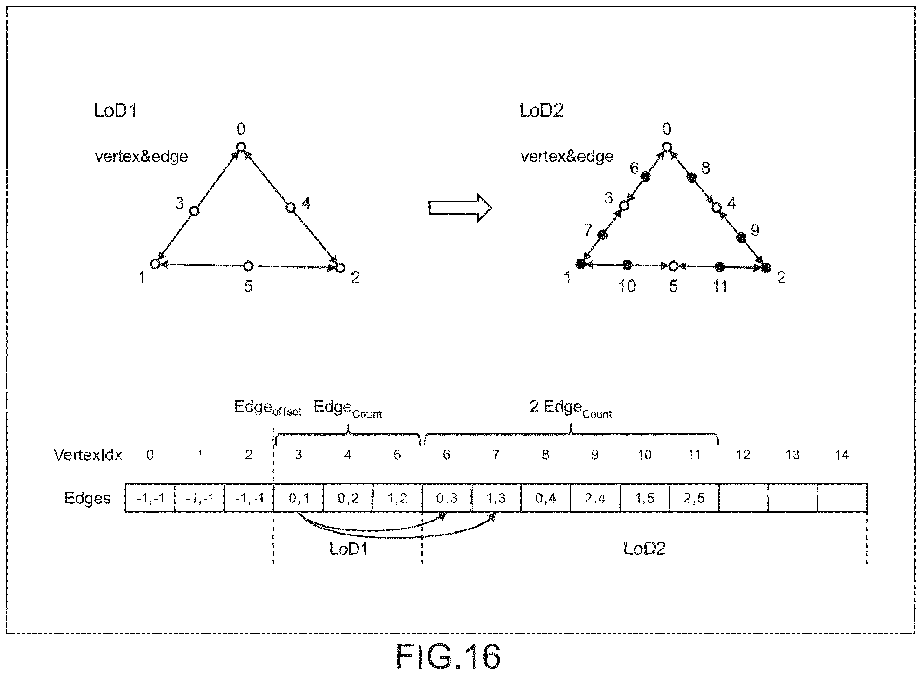

Next, an example of a flow of the subdivision processing executed in Step S105 of Fig. 14 will be described with reference to the flowchart shown in Fig. 15. Descriptions will be given with reference to Figs. 16 to 18 as necessary.

When the subdivision processing is started, in Step S131, the subdivision unit 116 generates edge information regarding an edge at LoD1 on the basis of the base mesh, and updates triangle information. Further, in Step S132, the subdivision unit 116 generates vertex information regarding a vertex at LoD1 on the basis of the base mesh. The processing of Step S131 and the processing of Step S132 are also referred to as pre-processing. Any method can be used for this pre-processing. For example, the methods described with reference to Figs. 3 to 11 may be applied.

In other words, the subdivision unit 116 may generate edges, vertices, and triangles of a second lowest level of the definition on the basis of the base mesh corresponding to the lowest level of the definition, and execute the first generation process to the third generation process described below for a third lowest level and subsequent levels of the definition.

In Step S133, the subdivision unit 116 updates processing-target LoD to a next higher level.

In Step S134, the subdivision unit 116 generates edge information regarding an edge at processing-target LoD and vertex information regarding a vertex at processing-target LoD for each edge at LoD of the next lower level (the first generation process). That is, in the first generation process, the subdivision unit 116 generates vertices and edges at processing-target LoD positioned on respective edges at LoD of the next lower level (update for each edge). For example, the subdivision unit 116 equally divides each edge at LoD of the next lower level into two, sets each of the two as an edge at processing-target LoD, and sets a midpoint of each edge at processing-target LoD as a vertex at processing-target LoD. The subdivision unit 116 generates the vertices and the edges independently for each edge at LoD of the next lower level.

For example, it is assumed that the subdivision unit 116 performs the first generation process as shown in Fig. 16 to generate vertices and edges at LoD2 positioned on respective edges at LoD1. For example, when the first generation process is executed for an edge (0, 1) of an index 3 at LoD1, that corresponds to a vertex of the index 3 at LoD1, an edge (0, 3) of an index 6 and an edge (1, 3) of an index 7 at LoD2 are generated. In addition, a vertex of the index 6 that is a midpoint of the edge of the index 6 and a vertex of the index 7 that is a midpoint of the edge of the index 7 are generated. These vertices are vertices at LoD2.

When $Edge_{Count}$ indicates the number of edges at LoD of the next lower level, $Edge_{Offset}$ indicates an offset value of a storage position of edge information, and $Triangle_{count}$ indicates the number of triangles at processing-target LoD, in the case of the example shown in Fig. 16, these values are as follows.

$$Edge_{Count} = 3$$

$$Edge_{Offset} = 3$$

$$Triangle_{Count} = 4$$

Then, in the first generation process, two edges are added each time to existing edge index $id_{edge}$.

$$id\_edge: 0 \text{ to } (Edge_{Count} - 1)$$

$$id' = 2*id_{edge} + Edge_{Offset} + Edge_{count}$$

Indices of the write destination become id' + 0 and id' + 1. Therefore, the update of edge information can be expressed as follows.

$$edges[id' + 0] = (edges[id_{edge}][0], id_{edges})$$

$$edges[id' + 1] = (edges[id_{edge}][1], id_{edges})$$

In Step S135, the subdivision unit 116 generates edge information regarding an edge at processing-target LoD and vertex information regarding a vertex at processing-target LoD with respect to a central triangle (the second generation process). That is, in the second generation process, the subdivision unit 116 generates vertices and edges at processing-target LoD positioned on respective sides of the central triangle at processing-target LoD (update for each triangle). For example, the subdivision unit 116 sets each side of the central triangle as an edge at processing-target LoD, and sets a midpoint of each edge at processing-target LoD as a vertex at processing-target LoD. The subdivision unit 116 generates the vertices and the edges independently for each central triangle at processing-target LoD.

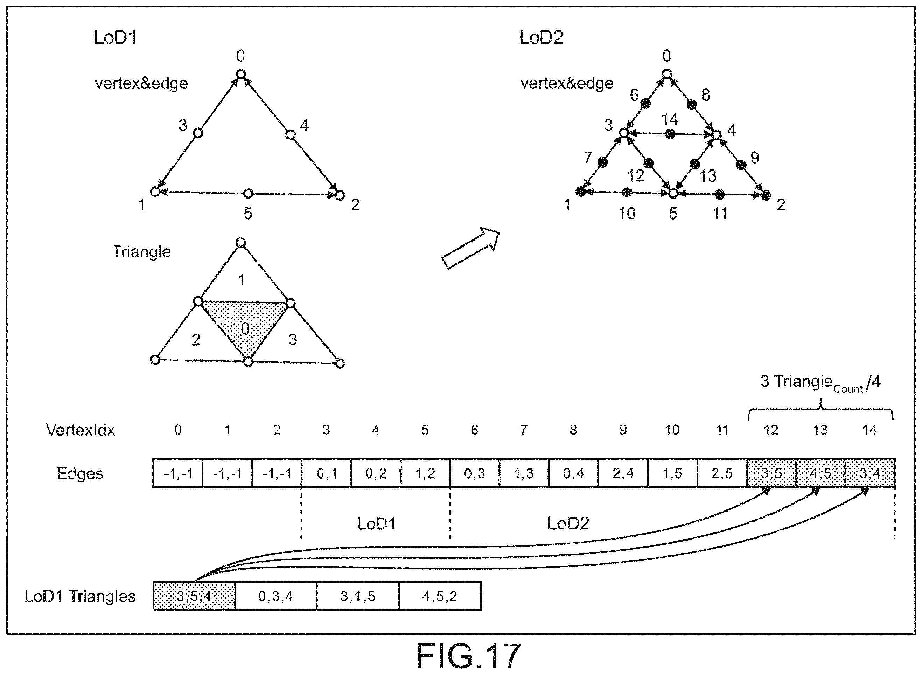

For example, it is assumed that the subdivision unit 116 performs the second generation process as shown in Fig. 17 to generate vertices and edges at LoD2 positioned on respective sides of a central triangle at LoD1. In this case, sides (3, 5), (4, 5), and (3, 4) of the central triangle 0 (3, 5, 4) at LoD1 colored in gray are set as the edges at LoD2 (indices 12 to 14), and midpoints of those edges are set as the vertices at LoD2 (indices 12 to 14).

In this case, the values of $Edge_{Count}$, $Edge_{Offset}$, and $Triangle_{count}$ are as follows.

$$Edge_{Count} = 3$$

$$Edge_{Offset} = 3$$

$$Triangle_{Count} = 4$$

Then, in the second generation process, three sides are added each time to existing triangle index $id_{tri}$.

$$id_{tri}: 0 \text{ to } (Triangle_{Count}/4 - 1)$$

$$id' = 3*id_{tri} + Edge_{Offset} + 3*Edge_{count}$$

The indices of the write destination become id' + 0, id' + 1, and id' + 2. Therefore, the update of edge information can be expressed as follows.

$$\text{edges[id' + 0] = (triangles[0], triangles[1])}$$

$$\text{edges[id' + 1] = (triangles[1], triangles[2])}$$

$$\text{edges[id' + 2] = (triangles[2], triangles[0])}$$

In Step S136, the subdivision unit 116 updates the triangle information (the third generation process). That is, in the third generation process, the subdivision unit 116 generates triangles at processing-target LoD independently for each triangle at LoD of the next lower level, using the vertices and edges generated by the first generation process and the second generation process. The subdivision unit 116 generates the triangles at processing-target LoD independently for each triangle.

The method of the third generation process is arbitrary. For example, information that can be handled similar to egdeToVertex may be prepared before the processing is repeated recursively in the subdivision processing, and the information may be updated when the processing is repeated recursively.

For example, in the third generation process, the subdivision unit 116 may update, using edges and vertices at a processing-target level, edgeToVertex, which represents other vertices linked to a desired vertex via edges, and the subdivision unit 116 may generate triangles at the processing-target level using edgeToVertex after the update. For example, the subdivision unit 116 may generate edgeToVertex at LoD1 in the pre-processing, and update edgeToVertex in a manner similar to that of the edge information when recursively repeating the processing.

The triangle information may be updated in a manner similar to that of the conventional method. In this case, the subdivision unit 116 further updates edgeToVertex. The subdivision unit 116 executes this update of edgeToVertex together with the update of the edge information and vertex information.

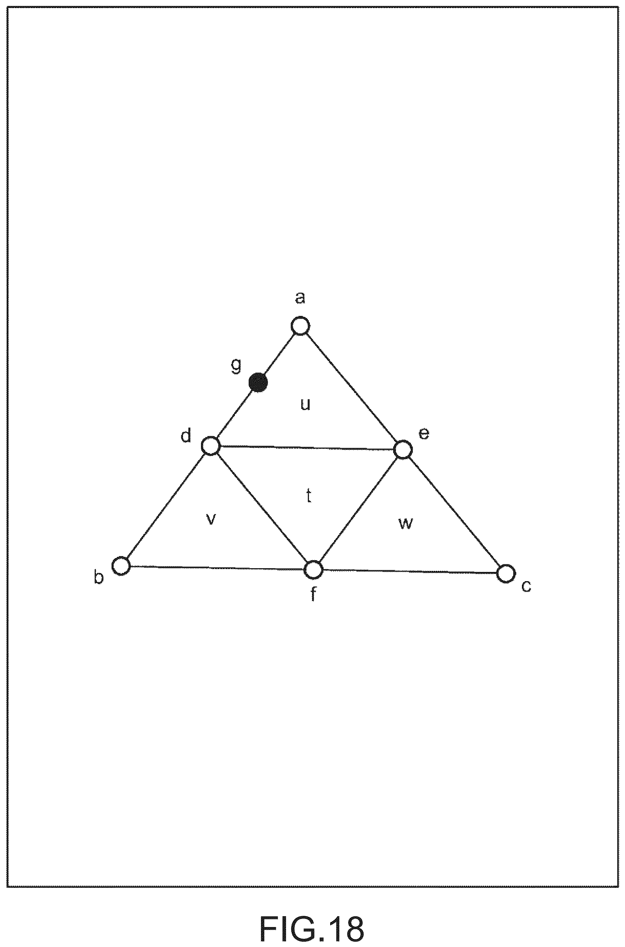

For example, in the case of Fig. 18, the subdivision unit 116 may add a vertex g and an edge g as follows.

edges_LoD2[g] ← (a, d)
edgeToVertex [a] [d] ← g

With such a configuration, the subdivision unit 116 can apply the method of updating triangle information according to the conventional technique.

Further, in the third generation process, the subdivision unit 116 may derive edges at a processing-target level that correspond to respective sides of a triangle at a next lower level, and the subdivision unit 116 may generate triangles at the processing-target level using the derived edges. For example, the subdivision unit 116 may construct triangle information in advance so that three edges, instead of three vertices, are obtained from a triangle, and derive the edges from an edge list.

Since the triangle information indicates the edge information, the subdivision unit 116 can obtain the vertex indices a to f of the triangles obtained after the division as follows from these pieces of information.

$$\text{triangles}_{\text{LoD0}}\text{[t] = (d, f, e)}$$

$$\text{edges[d] = (a, b)}$$

$$\text{edges[f] = (b, c)}$$

$$\text{edges[e] = (a, c)}$$

The subdivision unit 116 converts these into edges. Therefore, the indices of the edges (d, f), (e, f), and (d, e) can be derived as follows.

$$\text{edges[3t + 3edge}_{\text{Count}}\text{ + edge}_{\text{Offset}}\text{] = (d, f)}$$

$$\text{edges[3t + 3edge}_{\text{Count}}\text{ + edge}_{\text{Offset}}\text{ + 1] = (e, f)}$$

$$\text{edges}[3t + 3\text{edge}_{\text{Count}} + \text{edge}_{\text{offset}} + 2] = (d, e)$$

In addition, the indices of the edges (a, d), (b, d), and the like can be derived as follows.

$$\text{edges}[2d + \text{edge}_{\text{Count}} + \text{edge}_{\text{offset}}] = (a, d)$$

$$\text{edges}[2d + \text{edge}_{\text{Count}} + \text{edge}_{\text{offset}} + 1] = (b, d)$$

This allows the indices of all edges that form the triangles obtained after the division to be obtained, thus making it possible to update the triangles.

With such a configuration, the subdivision unit 116 can suppress an increase of required resources since the data to be generated in advance is only the edges at LoD1. The subdivision unit 116 can also suppress an increase of a load of data transfer.

Alternatively, the triangle information regarding a triangle at LoD1 may be generated in advance. For example, in the third generation process, the subdivision unit 116 may generate the remaining triangles at the processing-target level and a central triangle at a next higher level of the definition on the basis of the triangles at the next lower level and the central triangle at the processing-target level.

In the case of triangles$_{\text{LoD0}}$[t] = (a, b, c) and triangles$_{\text{LoD1}}$[t] = (d, f, e) at the time of $0 \leq t < \text{triangleCount}_{\text{LoD0}}$, edges [d], edges[f], and edges[e] can be obtained from the triangle update rule of the conventional method. Therefore, triangles can be updated in a manner similar to that of the method described above. For example, when repeating for an i-th time, triangles at LoD I+1 are updated.

$$\text{edges}[d] = (a, b)$$

$$\text{edges}[f] = (b, c)$$

$$\text{edges}[e] = (a, c)$$

With such a configuration, edgeToVertex is not necessary, so an increase of required resources can be suppressed as compared to the method described above. Moreover, the subdivision unit 116 can suppress an increase of the load of data transfer.

In Step S137, the subdivision unit 116 determines whether the subdivision has been performed until desired LoD is reached. That is, it is determined whether the subdivision has been performed until a definition equivalent to that of the original mesh is obtained.

When it has been determined that the subdivision has not been performed until desired LoD is reached, that is, when it has been determined that the definition is still lower (coarser) than that of the original mesh, the subdivision unit 116 shifts the processing back to Step S133 and repeats the processing after that. In other words, the processing of Steps S133 to S137 is repeated recursively until the base mesh is subdivided until desired LoD is reached.

Then, when it has been determined, in Step S137, that the subdivision has been performed until desired LoD is reached (the subdivision has been performed until the definition equivalent to that of the original mesh is obtained), the subdivision processing is ended, and the processing returns to Fig. 14.

By executing the subdivision processing as described above, the subdivision unit 116 can execute respective element processes of the subdivision processing independently. For example, the subdivision unit 116 can execute the element process for each edge at LoD of a next lower level and the element process for each triangle independently. Therefore, for example, the subdivision unit 116 can execute the element processes in parallel. Therefore, the subdivision unit 116 can suppress an increase of the processing time of the subdivision processing. Consequently, the decoding device 100 can suppress an increase of the processing time for decoding a mesh.

<Parallel processing>

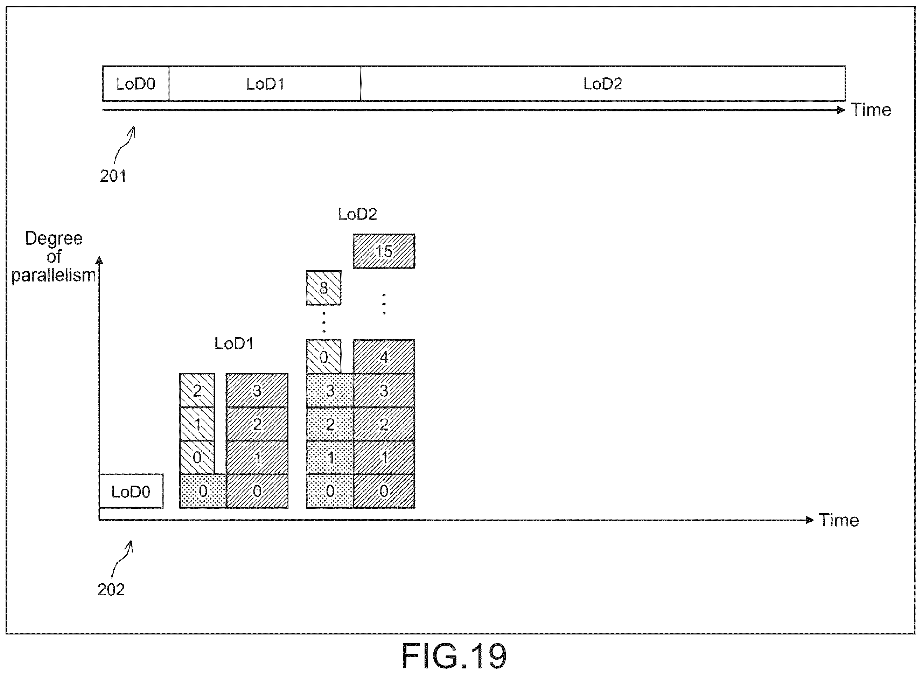

As described above, the subdivision unit 116 can execute respective element processes of the subdivision processing independently. Therefore, the subdivision unit 116 can execute the respective element processes in parallel, for example, as shown in the graph 202 of Fig. 19.

In Fig. 19, each square represents the element process (thread). As shown in Fig. 19, the subdivision is performed for each level (LoD) of the definition. In the processing at each level, as shown in the graph 201, the respective element processes are not successfully executed in parallel in the conventional method. Therefore, there has been a fear that the processing time will increase.

In contrast, in the case of the present technology described above, the element processes can be executed independently at each level. Therefore, as shown in the graph 202 of Fig. 19, the element processes can be executed in parallel.

For example, in the graph 202, the squares with diagonal lines from upper left to lower right indicate threads of the first generation process, and the numbers indicate indices of the respective threads. As shown in the graph 202, in the processing at each LoD, the subdivision unit 116 may execute the threads of the first process in parallel. In other words, the subdivision unit 116 may execute, in parallel, the first generation processes performed independently for respective edges at a next lower level.

Further, the hatched squares indicate threads of the second generation process, and the numbers indicate indices of the respective threads. As shown in the graph 202, in the processing at each LoD, the subdivision unit 116 may execute the threads of the second process in parallel.

Furthermore, as shown in the graph 202, in the processing at each LoD, the subdivision unit 116 may execute the first process and the second process in parallel.

Moreover, the squares with diagonal lines from upper right to lower left indicate threads of the third generation process, and the numbers indicate indices of the respective threads. As shown in the graph 202, in the processing at each LoD, the subdivision unit 116 may execute the threads of the third process in parallel. In other words, the subdivision unit 116 may execute, in parallel, the third generation processes performed independently for respective triangles at a next lower level.

Furthermore, the subdivision unit 116 may execute the first generation process to the third generation process in parallel for each triangle two levels lower in the definition.

In this manner, by executing the processes in parallel, the subdivision unit 116 can suppress an increase of the processing time of the subdivision processing. Therefore, the decoding device 100 can suppress an increase of the processing time for decoding a mesh.

<CPU, GPU>

It is noted that the subdivision processing (the steps shown in Fig. 15) described above may be executed by any hardware. For example, the subdivision processing may be executed by a CPU (Central Processing Unit), or may be executed by a GPU (Graphics Processing Unit). In general, a GPU has higher parallel processing performance than a CPU and can process the subdivision processing to which the present technology is applied at a higher speed. In other words, it is possible to suppress the increase of the processing time. In addition, since it is possible to reduce an occupancy rate of resources of the CPU by using the GPU, it is possible to suppress an increase of a processing time of processing other than the subdivision processing, that is executed by the CPU.

<Others>

In the descriptions above, the midpoint subdivision has been used as an example of the subdivision method, but the subdivision method is arbitrary. For example, vertices may be formed at positions other than the midpoints of edges. Also, the number of vertices, edges, and triangles to be added by one subdivision (processing at single LoD) may be other than those of the example described above.

Furthermore, in the descriptions above, the shape of the polygon has been a triangle. However, this shape is a mere example, and the shape of the polygon may be any polygonal shape.

<4. Notes>

<Control of application of present technology>

It is noted that another device such as an encoder may control whether a decoder (e.g., decoding device 100) is to apply the present technology. For example, flag information indicating whether to apply the present technology to decode a mesh may be associated with a bit stream as metadata and supplied to the decoder. In that case, the decoder may determine whether to apply the present technology to decode a mesh on the basis of that flag.

<Computer>

The series of processing described above can be executed by hardware or can be executed by software. When the series of processing is executed by software, a program configuring the software is installed in a computer. Herein, the computer includes a computer incorporated into dedicated hardware, a computer such as a general-purpose personal computer, for example, that is capable of installing various programs therein to execute various functions, and the like.

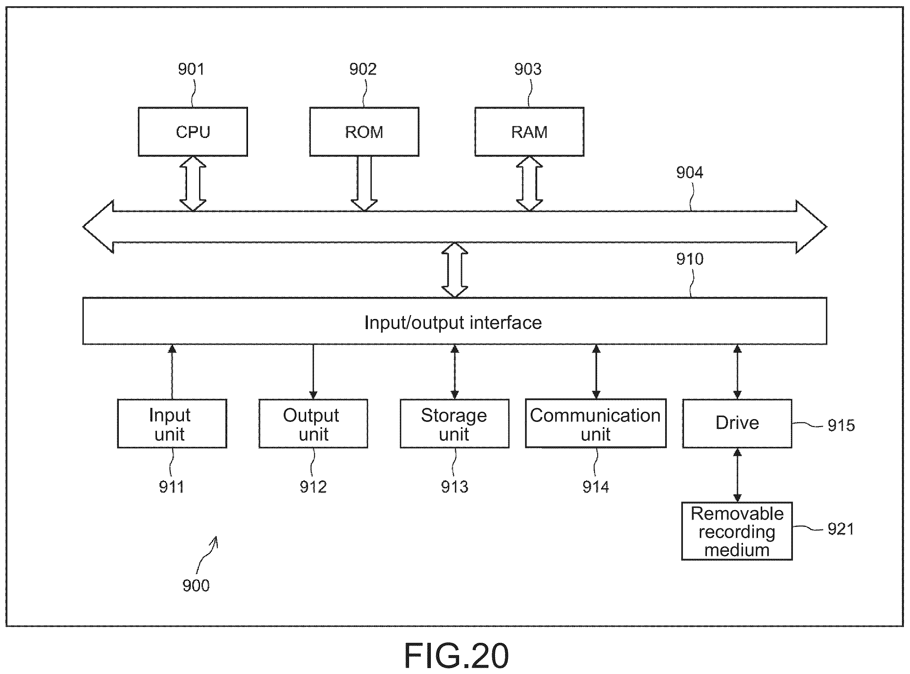

Fig. 20 is a block diagram showing a hardware configuration example of a computer that executes the series of processing described above by a program.

In a computer 900 shown in Fig. 20, a CPU (Central Processing Unit) 901, a ROM (Read Only Memory) 902, and a RAM (Random Access Memory) 903 are mutually connected via a bus 904.

An input/output interface 910 is also connected to the bus 904. Connected to the input/output interface 910 are an input unit 911, an output unit 912, a storage unit 913, a communication unit 914, and a drive 915.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a nonvolatile memory, and the like. The communication unit 914 includes, for example, a network interface. The drive 915 drives a removable recording medium 921 such as a magnetic disc, an optical disc, a magneto optical disc, or a semiconductor memory.

In the computer configured as described above, the CPU 901 loads a program stored in the storage unit 913 into the RAM 903 via the input/output interface 910 and the bus 904 and executes it, to carry out the series of processing described above, for example. Data required for the CPU 901 to execute various types of processing, and the like are also stored in the RAM 903 as appropriate.

The program executed by the computer can be applied by being recorded onto the removable recording medium 921 as a package medium or the like, for example. In that case, the program can be installed in the storage unit 913 via the input/output interface 910 by loading the removable recording medium 921 into the drive 915.

Further, this program can also be provided via wired or wireless transmission media such as a local area network, the Internet, and digital satellite broadcasting. In that case, the program can be received by the communication unit 914 to be installed in the storage unit 913.

Alternatively, this program can be installed in advance in the ROM 902 or the storage unit 913.

<Application target of present technology>

The present technology can be applied to arbitrary configurations. For example, the present technology may be applied to various electronic apparatuses.

Moreover, for example, the present technology can be executed as a partial configuration of an apparatus, such as a processor as a system LSI (Large Scale Integration) or the like (e.g., video processor), a module that uses a plurality of processors and the like (e.g., video module), a unit that uses a plurality of modules and the like (e.g., video unit), or a set obtained by adding other functions to the unit (e.g., video set).

Further, for example, the present technology can also be applied to a network system that includes a plurality of apparatuses. For example, the present technology may be executed as cloud computing in which a plurality of apparatuses share and cooperate to process via a network. For example, the present technology may be executed in, for example, a cloud service that provides a service related to images (moving images) to an arbitrary terminal such as a computer, an AV (Audio Visual) apparatus, a mobile information processing terminal, and an IoT (Internet of Things) device.

It is noted that in the present specification, the system refers to an aggregation of a plurality of constituent elements (apparatuses, modules (components), and the like), and whether all of the constituent elements are within the same housing is irrelevant. Accordingly, a plurality of apparatuses that are housed in separate housings and are connected via a network and a single apparatus in which a plurality of modules are housed in a single housing are both systems.

<Fields/uses to which present technology can be applied>

The systems, apparatuses, processing units, and the like to which the present technology is applied can be used in arbitrary fields of, for example, traffic, medical care, crime prevention, agriculture, livestock business, mining, beauty care, industrial plants, home electrical appliance, weather, natural surveillance, and the like. In addition, uses thereof are also arbitrary.

<Others>

It is noted that "flag" used in the present specification is information for identifying a plurality of states and includes not only information used when identifying two states of true (1) and false (0) but also information with which three or more states can be identified. Accordingly, values that this "flag" may take may be, for example, binary as in 1/0 or ternary or more. In other words, a bit count configuring this "flag" is arbitrary and may be 1 bit or a plurality of bits. Further, since identification information (including the flag) may take not only a form in which the identification information is incorporated in a bit stream but also a form in which difference information regarding a difference in the identification information with respect to certain information that becomes a reference is incorporated in a bit stream, in the present specification, the "flag" or "identification information" includes not only that information but also difference information with respect to information that becomes a reference.

In addition, various types of information (metadata etc.) related to encoded data (bit stream) may be transmitted or recorded in any form as long as the information is associated with the encoded data. Herein, the term "associate" means enabling, when processing one of the data, the other data to be used (to be linked). In other words, the data associated with each other may be compiled as one piece of data or may each be regarded as individual data. For example, information associated with encoded data (image) may be transmitted on a transmission path different from that of the encoded data (image). Further, for example, information associated with encoded data (image) may be recorded on a recording medium different from that of the encoded data (image) (or in a different recording area in the same recording medium). It is noted that this "associate" may be applied to not only the entire data but also a part of the data. For example, an image and information corresponding to the image may be associated with each other on any unit basis such as for each plurality of frames, for each frame, or for each portion in a frame.

It is noted that in the present specification, the terms "synthesize", "multiplex", "add", "integrate", "incorporate", "store", "put into", "inset", "insert", and the like mean compiling a plurality of objects into one, such as compiling encoded data and metadata into one piece of data, for example, and refer to one method of "associate" described above.

Further, embodiments of the present technology are not limited to the embodiments described above and can be variously modified without departing from the gist of the present technology.

For example, the configuration described as one apparatus (or processing unit) may be divided to be configured as a plurality of apparatuses (or processing units). Conversely, the configuration described above as a plurality of apparatuses (or processing units) may collectively be configured as one apparatus (or processing unit). Furthermore, configurations other than those described above may of course be added to the configurations of the respective apparatuses (or the respective processing units). In addition, as long as configurations and operations as the entire system are substantially the same, a part of a configuration of a certain apparatus (or processing unit) may be incorporated into a configuration of another apparatus (or another processing unit).

Furthermore, for example, the program described above may be executed in an arbitrary apparatus. In that case, the apparatus only needs to have necessary functions (functional blocks etc.) so as to be capable of acquiring necessary information.

Moreover, for example, respective steps of a single flowchart may be executed by a single apparatus, or may be shared by a plurality of apparatuses to be executed. In addition, when a plurality of processes is included in a single step, the plurality of processes may be executed by a single apparatus, or may be shared by a plurality of apparatuses to be executed. In other words, the plurality of processes included in a single step can be executed as processing of a plurality of steps. Conversely, processing described as a plurality of steps can collectively be executed as a single step.

Furthermore, for example, regarding the program executed by the computer, the processing of the steps describing the program may be executed in time series in the order described in the present specification, or may be executed individually in parallel at necessary timings, such as when invoked. In other words, as long as no contradiction is caused, the processing of the respective steps may be executed in an order different from the order described above. In addition, the processing of the steps describing the program may be executed in parallel with processing of other programs, or may be executed in combination with the processing of other programs.

Further, for example, as long as no contradiction is caused, the plurality of technologies related to the present technology can each be executed independently and individually. Of course, a plurality of arbitrary present technologies can be executed in combination. For example, a part or all of the present technology described in any of the embodiments can be executed in combination with a part or all of the present technology described in the other embodiments. Moreover, a part or all of the arbitrary present technology described above can be executed in combination with other technologies not described above.

It is noted that the present technology can also take the following configurations.

(1) An information processing apparatus, including:

a decoding unit which decodes a bit stream to generate a base mesh;
a subdivision unit which subdivides the base mesh until a desired definition is obtained, the subdivision being performed by recursively repeating a first generation process, a second generation process, and a third generation process until a desired level is reached, the first generation process being a process for generating edges and vertices at a processing-target level of a definition independently for each edge at a next lower level of the definition, the second generation process being a process for generating the edges and vertices at the processing-target level with respect to a central triangle at the next lower level, the third generation process being a process for generating triangles at the processing-target level independently for each triangle at the next lower level; and

a displacement vector application unit which applies displacement vectors to division points that are vertices of the base mesh subdivided until the desired definition is obtained, in which
the base mesh is a mesh that has a lower definition than an encoding-target original mesh including vertices and connections that represent a three-dimensional structure of an object, the base mesh being generated by decimating the vertices from the original mesh, and
the displacement vector indicates a positional difference between the division point and the vertex of the original mesh.

(2) The information processing apparatus according to (1), in which
the subdivision unit executes, in parallel, the first generation processes carried out independently for the respective edges at the next lower level.
(3) The information processing apparatus according to (1) or (2), in which
the subdivision unit executes, in parallel, the third generation processes carried out independently for the respective triangles at the next lower level.
(4) The information processing apparatus according to any one of (1) to (3), in which
the subdivision unit executes the first generation process and the second generation process in parallel.
(5) The information processing apparatus according to any one of (1) to (4), in which
the subdivision unit executes the first generation process to the third generation process in parallel for each triangle two levels lower in the definition.
(6) The information processing apparatus according to any one of (1) to (5), in which
in the third generation process, the subdivision unit updates, using the edges and vertices at the processing-target level, edgeToVertex, which represents other vertices linked to a desired vertex via edges, and the subdivision unit generates the triangles at the processing-target level using edgeToVertex after the update.
(7) The information processing apparatus according to any one of (1) to (5), in which
in the third generation process, the subdivision unit derives the edges at the processing-target level, which correspond to respective sides of the triangle at the next lower level, and the subdivision unit generates the triangles at the processing-target level using the derived edges.
(8) The information processing apparatus according to any one of (1) to (5), in which
in the third generation process, the subdivision unit generates, on the basis of the triangle at the next lower level and a central triangle at the processing-target level, remaining triangles at the processing-target level and a central triangle at a next higher level of the definition.
(9) The information processing apparatus according to any one of (1) to (8), in which
the subdivision unit

generates edges, vertices, and triangles at a second lowest level of the definition on the basis of the base mesh corresponding to a lowest level of the definition, and
executes the first generation process to the third generation process with respect to a third lowest level and subsequent levels of the definition.

(10) An information processing method, including:

decoding a bit stream to generate a base mesh;
subdividing the base mesh until a desired definition is obtained, the subdivision being performed by recursively repeating a first generation process, a second generation process, and a third generation process until a desired level is reached, the first generation process being a process for generating edges and vertices at a processing-target level of a definition independently for each edge at a next lower level of the definition, the second generation process being a process for generating the edges and vertices at the processing-target level with respect to a central triangle at the next lower level, the third generation process being a process for generating triangles at the processing-target level independently for each triangle at the next lower level; and
applying displacement vectors to division points that are vertices of the base mesh subdivided until the desired definition is obtained, wherein
the base mesh is a mesh that has a lower definition than an encoding-target original mesh including vertices and connections that represent a three-dimensional structure of an object, the base mesh being generated by decimating the vertices from the original mesh, and
the displacement vector indicates a positional difference between the division point and the vertex of the original mesh.

Reference Signs List

| | |
|---|---|
| 100 | decoding device |
| 111 | demultiplexing unit |
| 112 | base mesh decoding unit |
| 113 | displacement video decoding unit |
| 114 | atlas data decoding unit |
| 115 | attribute video decoding unit |
| 116 | subdivision unit |
| 117 | displacement vector application unit |
| 121 | decoding unit |
| 900 | computer |

**Claims**

1. An information processing apparatus, comprising:

a decoding unit which decodes a bit stream to generate a base mesh;
a subdivision unit which subdivides the base mesh until a desired definition is obtained, the subdivision being performed by recursively repeating a first generation process, a second generation process, and a third generation process until a desired level is reached, the first generation process being a process for generating edges and vertices at a processing-target level of a definition independently for each edge at a next lower level of the definition, the second generation process being a process for generating the edges and vertices at the processing-target level with respect to a central triangle at the next lower level, the third generation process being a process for generating triangles at the processing-target level independently for each triangle at the next lower level; and
a displacement vector application unit which applies displacement vectors to division points that are vertices of the base mesh subdivided until the desired definition is obtained, wherein
the base mesh is a mesh that has a lower definition than an encoding-target original mesh including vertices and connections that represent a three-dimensional structure of an object, the base mesh being generated by decimating the vertices from the original mesh, and
the displacement vector indicates a positional difference between the division point and the vertex of the original mesh.

2. The information processing apparatus according to claim 1, wherein
the subdivision unit executes, in parallel, the first generation processes carried out independently for the respective edges at the next lower level.

3. The information processing apparatus according to claim 1, wherein
the subdivision unit executes, in parallel, the third generation processes carried out independently for the respective triangles at the next lower level.

4. The information processing apparatus according to claim 1, wherein
the subdivision unit executes the first generation process and the second generation process in parallel.

5. The information processing apparatus according to claim 1, wherein
the subdivision unit executes the first generation process to the third generation process in parallel for each triangle two levels lower in the definition.

6. The information processing apparatus according to claim 1, wherein
in the third generation process, the subdivision unit updates, using the edges and vertices at the processing-target level, edgeToVertex, which represents other vertices linked to a desired vertex via edges, and the subdivision unit generates the triangles at the processing-target level using edgeToVertex after the update.

7. The information processing apparatus according to claim 1, wherein
in the third generation process, the subdivision unit derives the edges at the processing-target level, which correspond to respective sides of the triangle at the next lower level, and the subdivision unit generates the triangles at the processing-target level using the derived edges.

8. The information processing apparatus according to claim 1, wherein
in the third generation process, the subdivision unit generates, on a basis of the triangle at the next lower level and a central triangle at the processing-target level, remaining triangles at the processing-target level and a central triangle at a next higher level of the definition.

9. The information processing apparatus according to claim 1, wherein
the subdivision unit

generates edges, vertices, and triangles at a second lowest level of the definition on a basis of the base mesh corresponding to a lowest level of the definition, and
executes the first generation process to the third generation process with respect to a third lowest level and subsequent levels of the definition.

10. An information processing method, comprising:

decoding a bit stream to generate a base mesh;
subdividing the base mesh until a desired definition is obtained, the subdivision being performed by recursively repeating a first generation process, a second generation process, and a third generation process until a desired level is reached, the first generation process being a process for generating edges and vertices at a processing-target level of a definition independently for each edge at a next lower level of the definition, the second generation process being a process for generating the edges and vertices at the processing-target level with respect to a central triangle at the next lower level, the third generation process being a process for generating triangles at the processing-target level independently for each triangle at the next lower level; and
applying displacement vectors to division points that are vertices of the base mesh subdivided until the desired definition is obtained, wherein
the base mesh is a mesh that has a lower definition than an encoding-target original mesh including vertices and connections that represent a three-dimensional structure of an object, the base mesh being generated by decimating the vertices from the original mesh, and
the displacement vector indicates a positional difference between the division point and the vertex of the original mesh.

EP 4 700 711 A1

Mesh

Texture

V1(X1,Y1,Z1)
V2(X2,Y2,Z2)
V3(X3,Y3,Z3)
V4(X4,Y4,Z4)
⋮

V1,V2,V3
V1,V3,V4
V4,V3,V5
⋮

V1→uv(0,0)
V2→uv(0.2,0.4)
V3→uv(0.3,0.5)
V4→uv(0.4,0.6)
⋮

14

15

16

17

FIG.1

FIG.2

FIG.3

|  | v0 | v1 | v2 | v3 |
|---|---|---|---|---|
| vertex(float3[]) |  |  |  |  |

|  | e0 | e1 | e2 | e3 |
|---|---|---|---|---|
| edges(int2[]) | -1,-1 | -1,-1 | -1,-1 | -1,-1 |

|  | t0 | t1 |
|---|---|---|
| triangles(int3[]) | v0,v1,v2 | v1,v3,v2 |

FIG.4

vertexToTriangle : Capable of accessing id of triangle in contact with each vertex

v0    v1    v2    v3

| t0 | t0 | t1 | t0 | t1 | t1 |

Look at triangle and check relationship between vertex and triangle

FIG.5

EP 4 700 711 A1

EP 4 700 711 A1

vertexToEdge： Capable of accessing id of vicinal point connected to
each vertex by edge

| | v0 | | v1 | | v2 | | v3 |
| t0 | | t0 | t1 | t0 | t1 | t1 |
| v1 | v2 | v0 | v2 | ✖ | εv | v0 | v1 | ✖ | v3 | v1 | v2 |

Points already checked in other triangles are not added to avoid repetition

* The processes need to be executed sequentially

FIG.6

vertexToEdge : Capable of accessing id of vicinal point connected to each vertex by edge

v0　　v1　　v2　　v3

t0　　t0　t1　　t0　t1　t1

| v1 | v2 | ✕ | v2 | v3 | ✕ | ✕ | v3 | ✕ | ✕ |

vertex (float3[])

v0　　v1　　v2　　v3

edges (int2[])

e0　　e1　　e2　　e3　　e4　　e5　　e6　　e7　　e8

| -1,-1 | -1,-1 | -1,-1 | -1,-1 | v0,v1 | v0,v2 | v1,v2 | v1,v3 | v2,v3 |

triangles (int3[])

t0　　　　t1

| v0,v1,v2 | v1,v3,v2 |

FIG.7

EP 4 700 711 A1

FIG.8

FIG.9

EP 4 700 711 A1

At time of trianglesLoD0 [t] = (a, b, c), vertex indices
a to f for dividing triangle are obtained from
        edgeToVertex[a][b] = d
        edgeToVertex[b][c] = e
        edgeToVertex[a][c] = f

Update triangle as follows.
        trianglesLoD1[t] ← (d, f, e)
        trianglesLoD1[u] ← (a, d, e)
        trianglesLoD1[v] ← (d, b, f)
        trianglesLoD1[w] ← (e, f, c)

# FIG.10

FIG.11

FIG.12

FIG.13

Start decoding
processing

S101

Perform Demultiplexing

S102

Decode atlas data

S103

Decode displacement video

S104

Decode base mesh

S105

Subdivide base mesh

S106

Apply displacement vectors
to division points

S107

Decode attribute video

End

FIG.14

Start subdivision
processing

S131
Generate edge information regarding edge at LoD1
on basis of base mesh, and update triangle information

S132
Generate vertex information regarding vertex at
LoD1 on basis of base mesh

S133
Update processing-target LoD

S134
Generate edge information regarding edge at processing-
target LoD and vertex information regarding vertex at
processing-target LoD for each edge at LoD of next lower level

S135
Generate edge information regarding edge at processing-
target LoD and vertex information regarding vertex at
processing-target LoD with respect to central triangle

S136
Update triangle information

S137
No — Has subdivision been performed
until desired LoD is reached?

Yes

Return

# FIG.15

FIG.16

FIG.17

FIG.18

FIG.19

FIG.20

## INTERNATIONAL SEARCH REPORT

| International application No. |
| --- |
| **PCT/JP2024/013546** |

| A. | CLASSIFICATION OF SUBJECT MATTER |
| --- | --- |

*G06T 17/20*(2006.01)i; *G06T 9/00*(2006.01)i
FI:   G06T17/20 500; G06T9/00 100

According to International Patent Classification (IPC) or to both national classification and IPC

| B. | FIELDS SEARCHED |
| --- | --- |

Minimum documentation searched (classification system followed by classification symbols)

G06T17/20; G06T9/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2021-22122 A (CANON KABUSHIKI KAISHA) 18 February 2021 (2021-02-18) entire text, all drawings | 1-10 |
| A | JP 2020-119292 A (CANON KABUSHIKI KAISHA) 06 August 2020 (2020-08-06) entire text, all drawings | 1-10 |
| A | JP 2000-92487 A (SAMSUNG ELECTRONICS CO., LTD.) 31 March 2000 (2000-03-31) entire text, all drawings | 1-10 |
| A | US 2004/0090438 A1 (ALLIEZ, Pierre) 13 May 2004 (2004-05-13) entire text, all drawings | 1-10 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 May 2024** | **04 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/013546** |

| Patent document cited in search report | | | Publication date (day/month/year) | Patent family member(s) | | | Publication date (day/month/year) |
| --- | --- | --- | --- | --- | --- | --- | --- |
| JP | 2021-22122 | A | 18 February 2021 | (Family: none) | | | |
| JP | 2020-119292 | A | 06 August 2020 | US | 2020/0242837 | A1 | |
| | | | | entire text, all drawings | | | |
| JP | 2000-92487 | A | 31 March 2000 | US | 2007/0194975 | A1 | |
| | | | | entire text, all drawings | | | |
| | | | | KR | 10-2000-0016837 | A | |
| US | 2004/0090438 | A1 | 13 May 2004 | WO | 2001/099052 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KHALED MAMMOU** ; **JUNGSUN KIM** ; **ALEXIS TOURAPIS** ; **DIMITRI PODBORSKI** ; **KRASIMIR KOLAROV**. V-CG] Apple's Dynamic Mesh Coding CfP Response. *ISO/IEC JTC 1/SC 29/WG 7 m59281*, April 2022